(19) **Europäisches Patentamt**
**European Patent Office**
**Office européen des brevets**

(11) **EP 2 639 604 A2**

(12) **EUROPEAN PATENT APPLICATION**

(43) Date of publication:
**18.09.2013 Bulletin 2013/38**

(51) Int Cl.:
***G01V 99/00*** *(2009.01)*

(21) Application number: **13159064.8**

(22) Date of filing: **13.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.03.2012 US 201261610667 P**
**09.03.2013 US 201313791939**

(71) Applicants:
• **Service Pétroliers Schlumberger**
**75007 Paris (FR)**
Designated Contracting States:
**FR**
• **Logined B.V.**
**2586 BJ S Gravenhage (NL)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventors:
• **Maerten, Frantz**
**34570 PIGNAN (FR)**
• **Maerten, Laurent**
**34830 Clapiers (FR)**
• **Lejri, Mostapha**
**34090 Montpellier (FR)**

(74) Representative: **Giovannini, Francesca**
**Osha Liang**
**32, avenue de l'Opéra**
**75002 Paris (FR)**

(54) **Method and system for presenting stress domain**

(57) A method for presenting a stress domain includes analyzing, using a cost function, multiple stress ratio values and orientation values to obtain results, generating a stress domain diagram relating the stress ratio values and the orientation values to the results, and presenting the stress domain diagram.

FIG.2

**Description**

BACKGROUND

A fault may be considered a finite complex three-dimensional surface discontinuity in a volume of earth or rock. Fractures, including, without limitation, joints, veins, dikes, pressure solution seams with stylolites, and so forth, may be propagated intentionally, to increase permeability in formations such as shale, in which optimizing the number, placement, and size of fractures in the formation increases the yield of resources like shale gas.

Stress, in continuum mechanics, may be considered a measure of the internal forces acting within a volume. Such stress may be defined as a measure of the average force per unit area at a surface within the volume on which internal forces act. The internal forces may be produced between the particles in the volume as a reaction to external forces applied to the volume.

Understanding the origin and evolution of faults and the tectonic history of faulted regions can be accomplished by relating fault orientation, slip direction, geologic and geodetic data to the state of stress in the earth's crust. In certain inverse problems, the directions of the remote principal stresses and a ratio of their magnitudes are constrained by analyzing field data on fault orientations and slip directions as inferred from artifacts such as striations on exposed fault surfaces.

Certain methods for stress inversion that use measured striations and/or throw on faults, may be based on the assumptions that the stress field is uniform within the rock mass embedding the faults (assuming no perturbed stress field), and that the slip on faults has the same direction and sense as the resolved far field stress on the fault plane. However, it has been shown that slip directions may be affected by one or more of: anisotropy in fault compliance caused by irregular tip-line geometry; anisotropy in fault friction (e.g., surface corrugations); heterogeneity in host rock stiffness; and perturbation of the local stress field due to mechanical interactions of adjacent faults. Mechanical interactions due to complex faults geometry in heterogeneous media may be taken into account while doing the stress inversion. By doing so, determining the parameters of such paleostress in the presence of multiple interacting faults may involve running numerous simulations, and therefore a comparatively large amount of computation time in order to fit the observed data. The conventional parameters space may be scanned for possibilities (e.g., all possibilities), and for each simulation, the model and the post-processes may be recomputed.

Motion equations might not be invoked while using certain methods, and perturbations of the local stress field by fault slip might be ignored. The mechanical role played by the faults in tectonic deformation might not be explicitly included in such analyses. Still, a relatively full mechanical treatment may be applied for conventional paleostress inversion. However, the results might be improved if multiple types of data could be used to better constrain the inversion.

SUMMARY

In general, in one aspect, embodiments relate to presenting stress domain. Multiple stress ratio values and orientation values are analyzed to obtain results. A stress domain diagram that relates the stress ratio values and the orientation values to the results is generated. Further, the stress domain diagram may be presented.

This summary is provided to introduce a selection of concepts that are further described below in the detailed description. This summary is not intended to identify key or essential features of the claimed subject matter, nor is it intended to be used as an aid in limiting the scope of the claimed subject matter.

BRIEF DESCRIPTION OF DRAWINGS

Embodiments of presenting a stress domain diagram are described with reference to the following figures. The same numbers are used throughout the figures to reference like features and components.

FIG. 1 is a diagram of an example stress and fracture modeling system.

FIG. 2 is a block diagram of an example computing environment for performing stress and fracture modeling using the principle of superposition.

FIG. 3 is a block diagram of an example stress and fracture modeling engine.

FIG. 4 is a block diagram comparing techniques for recovering paleostress.

FIG. 5 is a diagram of an example method applied to fracture and conjugate fault planes using data sets without magnitude information.

FIG. 6 is diagram comparing example stress inversion for normal fault and thrust fault configurations.

FIG. 7 is a diagram of cost functions for the stress inversions of FIG. 6.

FIG. 8 is a diagram of an example model configuration showing InSAR data points and a fault surface.

FIG. 9 is a diagram comparing fringes from an original InSAR grid and an InSAR grid recovered by an example stress and fracture modeling method using the principle of superposition.

FIG. 10 is a diagram showing a top view and a front perspective view of a plot of the cost surface for an example method applied to the InSAR case of Figs. 8-9, with cost solution indicated.

FIG. 11 is a diagram showing results of an example method applied to a flattened horizon scenario.

FIG. 12 is a flow diagram of an example method of stress and fracture modeling using the principle of superposition.

FIG. 13 is a flow diagram of an example method of stress and fracture modeling using the principle of superposition and a cost function.

FIG. 14 is an example stress domain diagram.

FIG. 15 is a flow diagram of an example method of stress and fracture modeling.

FIG. 16 is an example display of a stress domain diagram.

DETAILED DESCRIPTION

In the following detailed description of embodiments, numerous specific details are set forth in order to provide a more thorough understanding. However, it will be apparent to one of ordinary skill in the art that embodiments may be practiced without these specific details. In other instances, well-known features have not been described in detail to avoid unnecessarily complicating the description.

An example of stress and fracture modeling using the principal of superposition is provided. An example system simulates linearly independent far field stress models for a subsurface earth volume, computing one or more stress, strain, and/or displacement values based on superposition of independent stress tensors. Based on the precomputed values, the system can generate real-time results, such as recovery of paleostress values, or, stress, strain, and displacement parameters for any point in the subsurface volume as the user varies the far field stress value. The system may recover one or more tectonic events, or a stress tensor represented by a ratio of principal magnitudes and associated orientation, using at least one of fault geometry, well bore data (including fracture orientation and secondary fault plane data), GPS, InSAR, folded and faulted horizons, tiltmeters, slip and slikenlines on faults. The system can use different types of geologic data from seismic interpretation, well bore readings, and field observation to provide numerous results, such as predicted fracture propagation based on perturbed stress field.

In general, example embodiments may provide a method and system for presenting results indicating how well stress ratio values and orientation values match observed data. Specifically, one or more embodiments are directed to generating a stress domain diagram. The stress domain diagram displays multiple points that relate stress ratio and orientation to a fitness value. The fitness value defines how well the analysis matches observed data.

Definitions

In the description below, certain variables are used in order to simplify the presentation. Table 1 below shows each variable that may be used and the variables' corresponding definition in accordance with one or more embodiments.

**Table 1**

| Variable | Definition |
|---|---|
| $\sigma_R$ | The regional far field stress tensor |
| $\sigma_H$ | The maximum horizontal principal stress (extracted from $\sigma_R$) |
| $\sigma_h$ | The minimum horizontal principal stress (extracted from $\sigma_R$) |
| $\sigma_v$ | The vertical principal stress (extracted from $\sigma_R$) |
| R | The stress ratio defined as $(\sigma_2 - \sigma_3)/(\sigma_1 - \sigma_3)$ and $\in [0,1]$ |
| R' | Another stress ratio $\in [0,3]$, defined $\textbf{\textit{R'}} = \textbf{\textit{R}}$ for normal fault regime, $\textbf{\textit{R'}} = 2 - \textbf{\textit{R}}$ for strike-slip fault regime, and $\textbf{\textit{R'}} = 2 + \textbf{\textit{R}}$ for reverse fault regime. |
| $\mathbf{R}_{\theta,\varphi,\Psi}$ | A rotation matrix defined by the three Euler angles |
| $n$ | The number of triangular elements making the fault surfaces |
| $p$ | The number of observation points or data points |
| $\bar{\textbf{\textit{b}}}$ | The slip vector on a triangular element of a fault surface |
| $\theta$ | The orientation of the regional far field stress. In one or more embodiments the orientation is according to the north and oriented clockwise |

(continued)

| Variable | Definition |
|---|---|
| $\sigma_1$ | The maximum principal stress value of a stress tensor |
| $\sigma_2$ | The intermediate principal stress value of a stress tensor |
| $\sigma_3$ | The minimum principal stress value of a stress tensor |
| $\boldsymbol{R}_\theta$ | A rotation matrix along the z-axis of an angle $\theta$ (see above) |
| $k$ | A scaling parameter defined as $\sigma_2/\sigma_1$ |
| $\sigma_{ij}$ | The component $(i,j)$ of a stress tensor |
| $\alpha_i$ | Triplet scalar parameters used for the principal of superposition |
| $\in_{\boldsymbol{P}}$ | The strain tensor computed at point $\boldsymbol{P}$ |
| $\sigma_{\boldsymbol{P}}$ | The stress tensor computed at point $\boldsymbol{P}$ |
| $\boldsymbol{u_P}$ | The displacement field computed at point $\boldsymbol{P}$ |
| $\boldsymbol{b_e}$ | The slip vector computed at the triangular element $\boldsymbol{e}$ |
| $\boldsymbol{A}$ | A 3x3 matrix relating $\alpha$ and $\sigma_R$ |
| $\overrightarrow{\boldsymbol{n_P}}$ | A normal to a plane at point P |
| $u_P^c$ | The displacement field computed at point $\boldsymbol{P}$, where superscript $\boldsymbol{c}$ indicates "computed" |
| $u_P^m$ | The displacement field computed at point $\boldsymbol{P}$, where superscript $\boldsymbol{m}$ indicates "measured" |

Overview

This disclosure describes stress and fracture modeling using the principle of superposition. Given diverse input data, such as faults geometry, and selectable or optional data sets or data measures, including one or more of fault throw, dip-slip or slickenline directions, stress measurements, fracture data, secondary fault plane orientations, global positioning system (GPS) data, interferometric synthetic aperture radar (InSAR) data, geodetic data from surface tilt-meters, laser ranging, etc., the example system can quickly generate or recover numerous types of results. The systems and methods described herein apply the principle of superposition to fault surfaces with complex geometry in at least three dimensions (3D), and the faults are, by nature, of finite dimension and not infinite or semi-infinite. The results may be rendered in real-time and may include, for example, one or more of real-time stress, strain, and/or displacement parameters in response to one or more of a user query or an updated parameter; remote stress states for multiple tectonic events; prediction of intended future fracturing; differentiation of preexisting fractures from induced fractures; and so forth. The diverse input data can be derived from well bore data, seismic interpretation, field observation, etc.

The example systems and methods described below are applicable to many different reservoir and subsurface operations, including, without limitation, exploration and production operations for natural gas and other hydrocarbons, storage of natural gas, hydraulic fracturing and matrix stimulation to increase reservoir production, water resource management including development and environmental protection of aquifers and other water resources, capture and underground storage of carbon dioxide ($CO_2$), and so forth.

In an example implementation, a system applies a 3D boundary element technique using a principle of superposition that applies to linear elasticity for heterogeneous, isotropic whole- or half-space media. Based on precomputed values, the example system can assess a cost function to generate real-time results, such as stress, strain, and displacement parameters for any point in a subsurface volume as the user varies the far field stress value. In one implementation, the system may use fault geometry and well bore data, including, *e.g.*, fracture orientation, secondary fault plane data, and/or in-situ stress measurement by hydraulic fracture, to recover one or more tectonic events or a stress tensor represented by a ratio of principal magnitudes and the associated orientation. The system can use many different types of geologic data from seismic interpretation, well bore readings, and field observation to provide a variety of results, such as predicted fracture propagation based on perturbed stress field.

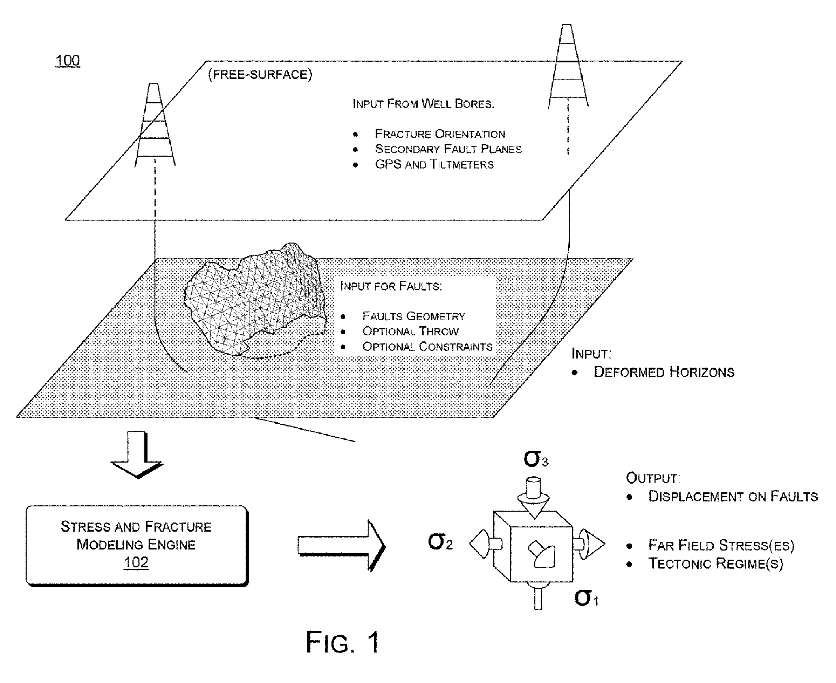

FIG. 1 shows an example stress and fracture modeling system 100. The example system 100 may be capable of solving a variety of geomechanical problems. The faults geometry may be known (and optionally, measured fault throw and imposed inequality constraints such as normal, thrust, etc., may be known) . The user may have access to one or more of data from well bores (*e.g.*, fracture orientation, in- situ stress measurements, secondary fault planes) , geodetic data (*e.g.*, InSAR, GPS, and tilt- meter) , and/or as interpreted horizons. An example stress and fracture modeling engine 102 and/or corresponding example methods can recover the remote stress state and tectonic regime for relevant tectonic event (s) , as well as displacement discontinuity on faults, and estimate the displacement and perturbed strain and stress fields anywhere within the system, for example.

Using the principle of superposition, the example stress and fracture modeling system 100 or engine 102 may perform each of three linearly independent simulations of stress tensor models in constant time regardless of the complexity of each underlying model. Each model does not have to be recomputed. Then, as introduced above, applications for the example system 100 may include one or more of stress interpolation and fracture modeling, recovery of tectonic event(s), quality control on interpreted faults, real-time computation of perturbed stress and displacement fields when the user is performing one or more of parameters estimation, prediction of fracture propagation, distinguishing preexisting fractures from induced fractures, and numerous other applications.

Example Environment

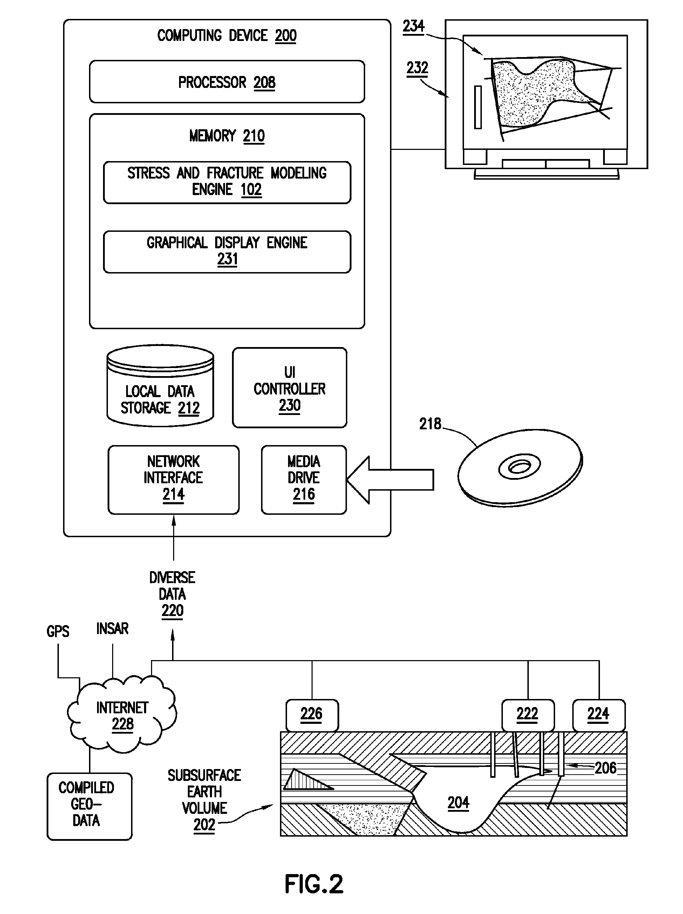

FIG. 2 shows the example system 100 of FIG. 1 in the context of a computing environment, in which stress and fracture modeling using the principle of superposition can be performed.

In the illustrated example, the computing device 200 is communicatively coupled via sensory devices (and control devices) with a real-world setting, for example, an actual subsurface earth volume 202, reservoir 204, depositional basin, seabed, etc., and associated wells 206 for producing a petroleum resource, for water resource management, or for carbon services, and so forth.

In the shown implementation, a computing device 200 implements a component, such as the stress and fracture modeling engine 102 and graphical display engine 231. The stress and fracture modeling engine 102 and graphical display engine are illustrated as software, but can be implemented as hardware or as a combination of hardware and software instructions.

The stress and fracture modeling engine 102 includes functionality to perform an analysis, *e.g.*, using a cost function of a stress ratio value and an orientation value. Performing the analysis is discussed below. In one or more embodiments, the stress ratio value may be defined as $\Phi$ in the equations below. The stress and fracture modeling engine 102 may further include functionality to calculate, for a particular point in the stress domain diagram, a fracture prediction, a perturbed stress field, and/or a displacement field.

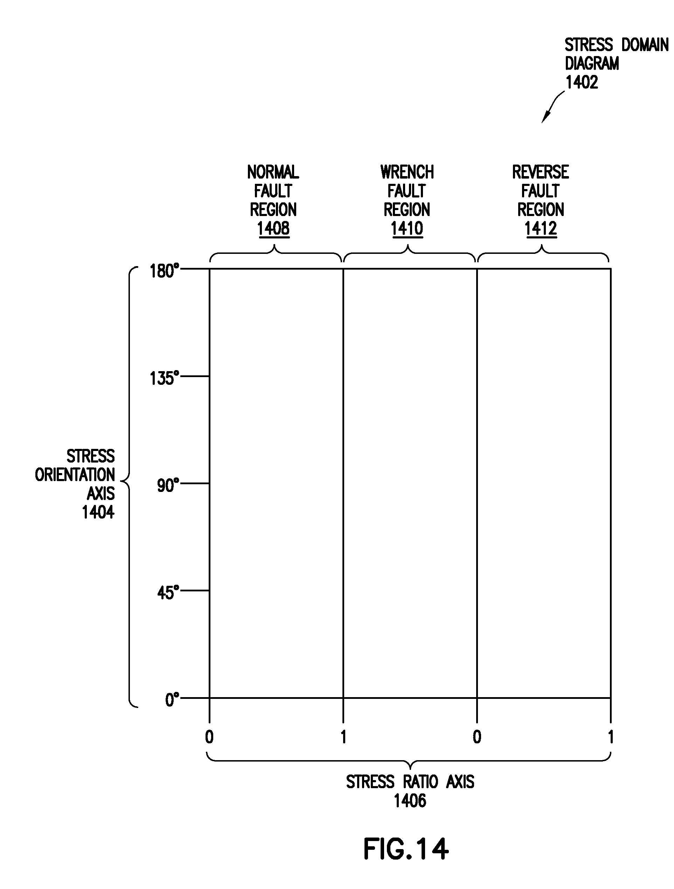

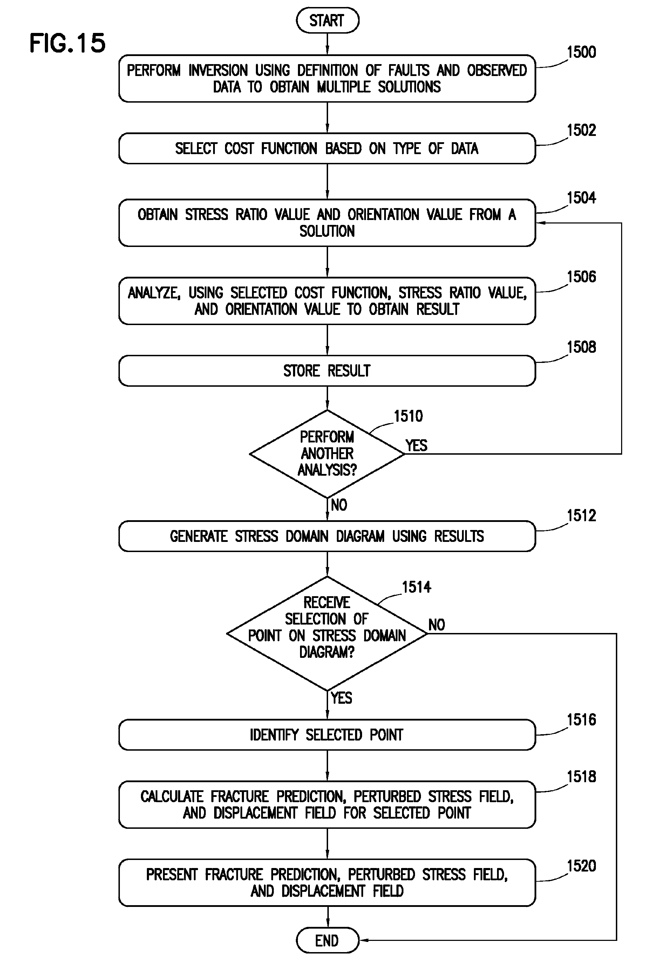

When executing, such as on processor 208, the stress and fracture modeling engine 102 is operatively connected to a graphical display engine 231. For example, the stress and fracture modeling engine 102 may be part of the same software application as the graphical display engine 231, the graphical display engine 231 may be a plug-in for the stress and fracture modeling engine 102, or another method may be used to connect the graphical display engine 231 to the stress and fracture modeling engine 102. The graphical display engine 231 includes functionality to generate a stress domain diagram from results. The stress domain diagram is discussed below and in FIG. 14. Generating the stress domain diagram is discussed below and in FIG. 15. Continuing with FIG. 2, the graphical display engine 231 further includes functionality to receive a selection of a point, request a fracture prediction, a perturbed stress field, and/or a displacement field for the particular point from the stress and fracture modeling engine in response to the selection, and present the fracture prediction, the perturbed stress field, and/or the displacement field. In one or more embodiments, the graphical display engine 231 is operatively connected to the user interface controller 230 and display 232.

The computing device 200 may be a computer, computer network, or other device that has a processor 208, memory 210, data storage 212, and other associated hardware such as a network interface 214 and a media drive 216 for reading and writing a removable storage medium 218. The removable storage medium 218 may be, for example, a compact disc (CD); digital versatile disk / digital video disc (DVD); flash drive, etc. The removable storage medium 218 contains instructions, which when executed by the computing device 200, cause the computing device 200 to perform one or more example methods described herein. Thus, the removable storage medium 218 may include instructions for implementing and executing the example stress and fracture modeling engine 102 and/or the graphical display engine 231. At least some parts of the example stress and fracture modeling engine 102 can be stored as instructions on a given instance of the removable storage medium 218, removable device, or in local data storage 212, to be loaded into memory 210 for execution by the processor 208. Specifically, software instructions or computer readable program code to perform embodiments may be stored, temporarily or permanently, in whole or in part, on a non-transitory computer readable medium such as a CD, a DVD, a local or remote storage device, local or remote memory, a diskette, or any other computer readable storage device.

Although the illustrated example stress and fracture modeling engine 102 and the graphical display engine 231 are depicted as a program residing in memory 210, a stress and fracture modeling engine 102 and/or the graphical display engine 231 may be implemented as hardware, such as an application specific integrated circuit (ASIC) or as a combination of hardware and software.

In this example system, the computing device 200 receives incoming data 220, such as faults geometry and many other kinds of data, from multiple sources, such as well bore measurements 222, field observation 224, and seismic interpretation 226. The computing device 200 can receive one or more types of data sets 220 via the network interface 214, which may also receive data from a network (*e.g.*, the Internet 228), such as GPS data and InSAR data.

The computing device 200 may compute and compile modeling results, simulator results, and control results, and a display controller 230 may output geological model images and simulation images and data to a display 232. The images may be 2D or 3D simulation 234 of stress and fracture results using the principle of superposition. The example stress and fracture modeling engine 102 may also generate one or more visual user interfaces (UIs) for input and/or display of data.

The example stress and fracture modeling engine 102 may also generate or ultimately produce control signals to be used via control devices, *e.g.*, such as drilling and exploration equipment, or well control injectors and valves, in real-world control of the reservoir 204, transport and delivery network, surface facility, and so forth.

Thus, an example system 100 may include a computing device 200 and interactive graphics display unit 232. The computing system as a whole may constitute simulators, models, and the example stress and fracture modeling engine 102.

Example Engine

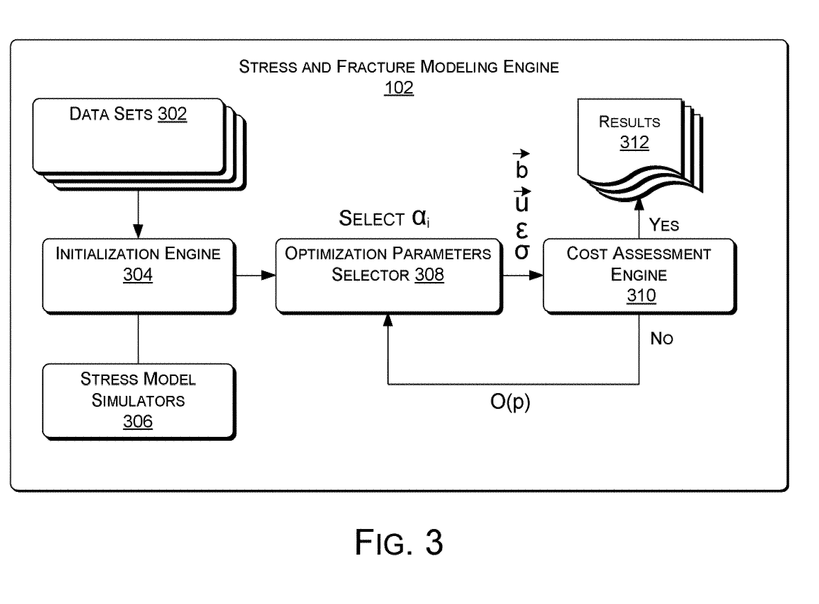

FIG. 3 shows the example stress and fracture modeling engine 102 in greater detail than in FIG. 1 and FIG. 2. The illustrated implementation is one example configuration for the sake of description, to introduce features and components of an engine that performs the example stress and fracture modeling using the principle of superposition. The illustrated components are examples. Different configurations or combinations of components than those shown may be used to perform the stress and fracture modeling functions, and different or additional components may also be used. As introduced above, the example stress and fracture modeling engine 102 can be implemented in hardware, or in combinations of hardware and software. Illustrated components are communicatively coupled with each other for communication as desired. Arrows are shown to suggest process flow or data flow, since the components can communicate with each other as desired.

The example stress and fracture modeling engine 102 illustrated in FIG. 3 includes a buffer for data sets 302 or at least access to the data sets 302, an initialization engine 304, stress model simulators 306 or at least an access to the stress model simulators 306, an optimization parameters selector 308, a cost assessment engine 310, and a buffer or output for results 312. These components are shown for descriptive purposes. Other components, or other arrangement of the components, can enable various implementations of the example stress and fracture modeling engine 102. The functionality of the example stress and fracture modeling engine 102 will be described next.

Operation of the Example System and Engine

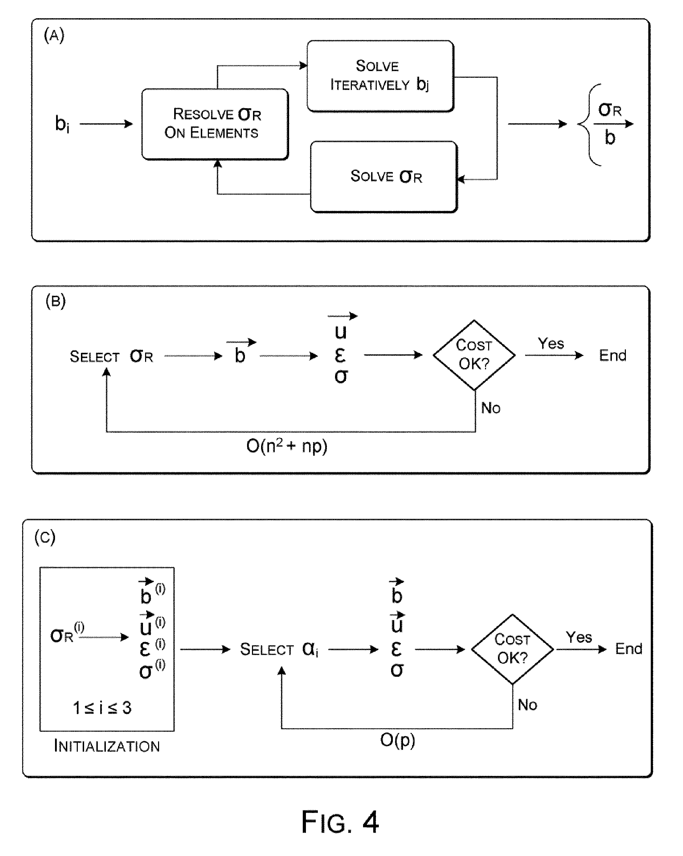

FIG. 4 shows various methods for recovering paleostress. FIG. 4(a) shows a conventional technique that uses slip distributions on faults as data input, but provides unstable results. The technique of FIG. 4(a) cannot augment the slip distributions with other forms of data input, such as GPS data, and so forth. FIG. 4(b) depicts a 2D Monte Carlo method, but without the optimization using the principle of superposition. FIG. 4(c) shows an example method as described herein, including techniques that utilize the principle of superposition that reduce the complexity of the model (in some cases the complexity of the model is highly reduced). The example method shown in FIG. 4(c) may be implemented by the example stress and fracture modeling engine 102. For example, in one implementation the initialization engine 304, through the stress model simulators 306, generates three precomputed models of the far field stress associated with a subsurface volume 202. For each of the three models, the initialization engine 304 precomputes certain values, for example, one or more of displacement, strain, and/or stress values. The optimization parameters selector 308 iteratively scales one or more of the displacement, strain, and/or stress values for each superpositioned model to minimize a cost at the cost assessment engine 310. The values thus optimized in real-time are used to generate particular results 312.

In one implementation, the three linearly independent far field stress parameters are: (i) orientation toward the North, and (ii) & (iii) the two principal magnitudes. These far field stress parameters are modeled and simulated to generate a set of the variables for each of the three simulated models. As an example, four variables can be used: displacement on a fault, the displacement field at any data point or observation point, a strain tensor at each observation point, and the tectonic stress. The optimization parameters selector 308 selects an alpha for each simulation, *i.e.*, a set of "alphas" for the three simulated stress models to act as changeable optimization parameters for iteratively converging on values for these variables in order to minimize one or more cost functions, to be described below. In one implementation, the optimization parameters selector 308 selects optimization parameters at random to begin converging the scaled strain, stress, and or displacement parameters to lowest cost. When the scaled (substantially optimized) parameters are assessed to have the lowest cost, the scaled strain, stress, and/or displacement parameters can be applied to predict a result, such as a new tectonic stress.

Because the example method of FIG. 4(c) uses precomputed values superpositioned from their respective simulations, the example method or the stress and fracture modeling engine 102 can provide results quickly, even in real-time in some cases. As introduced above, the stress and fracture modeling engine 102 can quickly recover multiple tectonic events responsible for present conditions of the subsurface volume 202 as compared to other methods, or more quickly discern induced fracturing from preexisting fracturing than conventional techniques, or provide real-time parameter estimation as the user varies a stress parameter, or can rapidly predict fracturing, and so forth.

While certain paleostress inversion methods may apply a full mechanical scenario, the stress and fracture modeling engine 102 improves upon certain techniques by using multiple types of data. Data sets 302 to be used are generally of two types: those which provide orientation information (such as fractures, secondary fault planes with internal friction angle, and fault striations, etc.), and those which provide magnitude information (such as fault slip, GPS data, InSAR data, etc.). Some paleostress inversion methods are computed using slip measurements on fault planes.

The technique shown in FIG. 4(a) executes an operation that proceeds in two stages: (i) resolving the initial remote stress tensor $\sigma_R$ onto the fault elements that have no relative displacement data and solving for the unknown relative displacements ($b_j$ in FIG. 4(a)); and, (ii) using the computed and known relative displacements to solve for $\sigma_R$ (FIG. 4(a)). An iterative solver is used, that cycle between stages (i) and (ii) until convergence.

The technique shown in FIG. 4(b) is based on a Monte-Carlo algorithm. However, this technique proves to be unfeasible since it involves a relatively long computation time, for which the complexity is $O(n^2 + p)$, where $n$ and $p$ are a number of triangular elements modeling the faults and the number of data points, respectively. For a given simulation, a random far field stress $\vec{\sigma_R}$ is chosen, and the corresponding displacement discontinuity $\vec{b}$ on faults is computed. Then, as a post-process at data points, and depending on the type of measurements, cost functions are computed using either the displacement, strain, or stress field. In this conventional scenario, for hundreds of thousands of simulations, the best cost (close to zero) is retained as a solution.

On the other hand, the example method diagrammed in FIG. 4(c), which can be executed by the stress and fracture modeling engine 102, extends inversion for numerous kinds of data, and provides a much faster modeling engine 102. For example, a resulting fast and reliable stress inversion is described below. The different types of data can be weighted and combined together. The stress and fracture modeling engine 102 can quickly recover the tectonic event(s) as well as displacement discontinuity on faults using diverse data sets and sources, and then obtain an estimate of the displacement and perturbed strain and stress field anywhere within the medium, using data available from seismic interpretation, well bores, and field observations. Applying the principle of superposition allows a user to execute parameters estimation in a very fast manner.

A numerical technique for performing the example methods is described next. Then, a reduced remote tensor used for simulation is described, and then the principle of superposition itself is described. An estimate of the complexity is also described.

In one implementation, a formulation applied by the stress and fracture modeling engine 102 can be executed using IBEM3D, a successor of POLY3D (POLY3D is described by F. Maerten, P. G. Resor, D. D. Pollard, and L. Maerten, Inverting for slip on three-dimensional fault surfaces using angular dislocations, Bulletin of the Seismological Society of America, 95:1654-1665, 2005, and by A. L. Thomas, Poly3D: a three-dimensional, polygonal element, displacement discontinuity boundary element computer program with applications to fractures, faults, and cavities in the earth's crust, Master's thesis, Stanford University, 1995.) IBEM3D is a boundary element code based on the analytical solution of an angular dislocation in a homogeneous or inhomogeneous elastic whole- or half-space. An iterative solver is employed for speed considerations and for parallelization on multi-core architectures. (see, for example, F. Maerten, L. Maerten, and M. Cooke, Solving 3d boundary element problems using constrained iterative approach, Computational Geosciences, 2009.) However, inequality constraints cannot be used as they are nonlinear and the principle of superposition does not apply. In the selected code, faults are represented by triangulated surfaces with discontinuous displacement. The advantage is that three-dimensional fault surfaces more closely approximate curvi-planar surfaces and curved tip-lines without introducing overlaps or gaps.

Mixed boundary conditions may be prescribed, and when traction boundary conditions are specified, the initialization engine 304 solves for unknown Burgers's components. After the system is solved, it is possible to compute anywhere, within the whole- or half-space, displacement, strain or stress at observation points, as a post-process. Specifically, the stress field at any observation point is given by the perturbed stress field due to slipping faults plus the contribution of the remote stress. Consequently, obtaining the perturbed stress field due to the slip on faults is not enough. Moreover, the estimation of fault slip from seismic interpretation is given along the dip-direction. Nothing is known along the strike-direction, and a full mechanical scenario may be involved to recover the unknown components of the slip vector as it will impact the perturbed stress field. Changing the imposed far field stress (orientation and or relative magnitudes) modifies the slip distribution and consequently the perturbed stress field. In general, a code such as IBEM3D is well suited for computing the full displacement vectors on faults, and may be optimized using an *H*-matrix technique. The unknown for purposes of modeling remains the estimation of the far field stress that has to be imposed as boundary conditions.

In an example method, which may be implemented by the stress and fracture modeling engine 102, a model composed of multiple fault surfaces is subjected to a constant far field stress tensor $\sigma_R$ defined in the global coordinate system by Equation (1):

$$\sigma_R = \begin{bmatrix} a_{11} & a_{12} & a_{13} \\ & a_{22} & a_{23} \\ & & a_{33} \end{bmatrix} \qquad (1)$$

Assuming a sub-horizontal far field stress (but the present methodology is not restricted to that case), Equation (1) simplifies into Equation (2):

$$\sigma_R = \begin{bmatrix} a_{11} & a_{12} & 0 \\ & a_{22} & 0 \\ & & a_{33} \end{bmatrix} \qquad (2)$$

Since the addition of a hydrostatic stress does not change $\sigma_R$, the far field stress tensor $\sigma_R$ can be written as in Equation (3):

$$\sigma_R = \begin{bmatrix} a_{11} - a_{33} & a_{12} & 0 \\ & a_{22} - a_{33} & 0 \\ & & 0 \end{bmatrix} = \begin{bmatrix} \bar{a}_{11} & a_{12} \\ & \bar{a}_{22} \end{bmatrix} \qquad (3)$$

Consequently, a definition of a far field stress with three unknowns is obtained, namely $\{\bar{a}_{11}, \bar{a}_{22}, \bar{a}_{12}\}$.

The far field stress tensor, as defined in Equation (3) can be computed using two parameters instead of the three $\{\bar{a}_{11}, \bar{a}_{22}, \bar{a}_{12}\}$. Using spectral decomposition of the reduced $\sigma_R$, Equation (4) may be obtained:

$$\sigma_R = R_\theta^T \sigma R_\theta \qquad (4)$$

where, as in Equation (5):

$$\sigma_R = \begin{bmatrix} \sigma_1 & 0 \\ & \sigma_2 \end{bmatrix} \qquad (5)$$

the far field stress tensor $\sigma_R$ is the matrix of principal values, and in Equation (6):

$$R_\theta = \begin{bmatrix} cos\ \theta & -sin\ \theta \\ sin\ \theta & cos\ \theta \end{bmatrix} \qquad (6)$$

is the rotation matrix around the global z-axis (since a sub-horizontal stress tensor is assumed).

By writing, in Equation (7):

$$\sigma_2 = k\sigma_1 \qquad (7)$$

Equation (4) then transforms into Equation (8):

$$\sigma_R(\theta, k) = \sigma_1 R_\theta^T \begin{bmatrix} 1 & 0 \\ 0 & k \end{bmatrix} R_\theta \tag{8}$$

Omitting the scaling parameter $\sigma_1$ due to Property 1 discussed below (when $\sigma_1 = \delta$ in Property 1), $\sigma_R$ can be expressed as a functional of two parameters $\theta$ and $k$, as in Equation (9):

$$\sigma_R(\theta, k) = R_\theta^T \begin{bmatrix} 1 & 0 \\ 0 & k \end{bmatrix} R_\theta \tag{9}$$

These two parameters are naturally bounded by Equation (10):

$$\begin{cases} -\pi/2 \leq \theta \leq \pi/2 \\ -10 \leq k \leq 10 \end{cases} \tag{10}$$

assuming that uniaxial remote stress starts to occur when $k \geq 10$. For k = 1, a hydrostatic stress tensor is found, which has no effect on the model. Also, using a lithostatic far field stress tensor (which is therefore a function of depth $z$) does not invalidate the presented technique, and Equation (9) transforms into Equation (11):

$$\sigma_R(\theta, k, z) = z R_\theta^T \begin{bmatrix} 1 & 0 \\ 0 & k \end{bmatrix} R_\theta \tag{11}$$

which is linearly dependent on $z$. The simplified tensor definition given by Equation (9) is used in the coming sections to determine $(\theta, k)$, or equivalently $\{\overline{\alpha}_{11}, \overline{\alpha}_{22}, \overline{\alpha}_{12}\}$, according to measurements.

It is worth noting that even when 2-dimensional parameter-space is used for the Monte-Carlo simulation using $(\theta, k)$, three components are still used for the far field stress, specified by the parameters $(\alpha_1, \alpha_3)$. The conversions are given by Expression (12):

$$(\theta, k) \longrightarrow (\sigma_{00}, \sigma_{01}, \sigma_{11}) \longrightarrow (\alpha_1, \alpha_2, \alpha_3) \tag{12}$$

where, in Equations (13):

$$\begin{cases} \sigma_{00} = \cos^2\theta + k\sin^2\theta \\ \sigma_{01} = (k-1)\cos\theta\sin\theta \\ \sigma_{11} = \cos^2\theta + k\sin^2\theta \end{cases} \tag{13}$$

and $(\alpha_1, \alpha_2, \alpha_3)$ are given by Equation (20), further below.

Principle of Superposition

The example stress and fracture modeling engine 102 may use the principle of superposition, a well-known principle in the physics of linear elasticity, to recover the displacement, strain and stress at any observation point P using the precomputed specific values from linearly independent simulations. The principle of superposition stipulates that a given value $f$ can be determined by a linear combination of specific solutions.

In the stress and fracture modeling engine 102, recovering a far field stress implies recovering the three parameters $(\alpha_1, \alpha_3)$. Therefore, the number of linearly independent solutions used is three. In other words, in Equation (14):

$$f = F(\sigma) = F\left(\alpha_1 \sigma^{(1)} + \alpha_2 \sigma^{(2)} + \alpha_3 \sigma^{(3)}\right)$$
$$= \alpha_1 F\left(\sigma^{(1)}\right) + \alpha_2 F\left(\sigma^{(2)}\right) + \alpha_3 F\left(\sigma^{(3)}\right) \quad (14)$$
$$= \alpha_1 f_1 + \alpha_2 f_2 + \alpha_3 f_3$$

where ($\alpha_1$, $\alpha_2$, $\alpha_3$) are real numbers, and $\sigma^{(i)}$ (for $i$ = 1 to 3) are three linearly independent remote stress tensors. If $F$ is selected to be the strain, stress or displacement Green's functions, then the resulting values $\epsilon$, $\sigma$, and $u$, at $P$ can be expressed as a combination of three specific solutions, as shown below. Thus, the strain, stress and displacement field for a tectonic loading are a linear combination of the three specific solutions, and are given by Equation (15):

$$\begin{cases} \epsilon_P = \alpha_1 \epsilon_P^{(1)} + \alpha_2 \epsilon_P^{(2)} + \alpha_3 \epsilon_P^{(3)} \\ \sigma_P = \alpha_1 \sigma_P^{(1)} + \alpha_2 \sigma_P^{(2)} + \alpha_3 \sigma_P^{(3)} \\ u_P = \alpha_1 u_P^{(1)} + \alpha_2 u_P^{(2)} + \alpha_3 u_P^{(3)} \end{cases} \quad (15)$$

Similarly, using ($\alpha_1$, $\alpha_2$, $\alpha_3$) allows recovery of the displacement discontinuities on the faults, as in Equation (16):

$$b_e = \alpha_1 b_e^{(1)} + \alpha_2 b_e^{(2)} + \alpha_3 b_e^{(3)} \quad (16)$$

and any far field stress is also given as a combination of the three parameters, as in Equation (17):

$$\sigma_R = \alpha_1 \sigma_R^{(1)} + \alpha_2 \sigma_R^{(2)} + \alpha_3 \sigma_R^{(3)} \quad (17)$$

Complexity Estimate

Changing $\sigma_R$ may involve recomputing the entire model in order to determine the corresponding unknown displacement discontinuities. Then, at any observation point $P$, the stress is determined as a superimposition of the far field stress $\sigma_R$ and the perturbed stress field due to slipping elements.

For a model made of $n$ triangular discontinuous elements, computing the stress state at point $P$ first may involve solving for the unknown displacement discontinuities on triangular elements (for which the complexity is $o(n^2)$, and then performing approximately 350$n$ multiplications using the standard method. By using the principle of superposition, on the other hand, the unknown displacement discontinuities on triangular elements do not have to be recomputed, and 18 multiplications may be performed by the example stress and fracture modeling engine 102. The complexity is independent of the number of triangular elements within the model, and is constant in time.

Some direct applications of the example methods will now be described, such as real-time evaluation of deformation and the perturbed stress field while a user varies a far field stress parameter. Paleostress estimation using different data sets 302 is also presented further below, as is an example method to recover multiple tectonic phases, and a description of how the example method can be used for quality control during fault interpretation.

Real-time Computation

Before describing the paleostress inversion method, another method is described first, for real-time computing displacement discontinuity on faults, and the displacement, strain, and stress fields at observation points while the orientation and/or magnitude of the far field stress is varied.

If the tectonic stress $\sigma_R$ is given and three independent solutions are known, there exists a unique triple ($\alpha_1$, $\alpha_2$, $\alpha_3$) for which Equation (17) is honored, and Equations (15) and (16) can be applied.

In matrix form, Equation (17) is written in the format shown in Equation (18):

$$\begin{bmatrix} \sigma_{00}^{(1)} & \sigma_{00}^{(2)} & \sigma_{00}^{(3)} \\ \sigma_{01}^{(1)} & \sigma_{01}^{(2)} & \sigma_{01}^{(3)} \\ \sigma_{11}^{(1)} & \sigma_{11}^{(2)} & \sigma_{11}^{(3)} \end{bmatrix} \begin{Bmatrix} \alpha_1 \\ \alpha_2 \\ \alpha_3 \end{Bmatrix} = \begin{Bmatrix} \sigma_{00}^R \\ \sigma_{01}^R \\ \sigma_{11}^R \end{Bmatrix} \qquad (18)$$

or, in compact form, as in Equation (19):

$$A_\sigma \alpha = \sigma_R \qquad (19)$$

Since the three particular solutions $\sigma^{(i)}$ are linearly independent, the system can be inverted, which gives Equation (20):

$$\alpha = A_\sigma^{-1} \sigma_R \qquad (20)$$

In Equation (20), $A_\sigma^{-1}$ is precomputed by the initialization engine 304. Given a user-selected remote stress, $\sigma_R$, the stress and fracture modeling engine 102 recovers the three parameters ($\alpha_1$, $\alpha_2$, $\alpha_3$), then the fault slip and the displacement, strain and stress field are computed in real-time using Equations (16) and (15), respectively. To do so, the three particular solutions of the displacement, strain and stress are stored at initialization at each observation point, as well as the displacement discontinuity on the faults. In one implementation, the example stress and fracture modeling engine 102 enables the user to vary the orientation and magnitude of $\sigma_R$, and to interactively display the associated deformation and perturbed stress field.

<u>Paleostress inversion using data sets</u>

As seen above, the main unknowns while doing forward modeling for the estimation of the slip distribution on faults, and consequently the associated perturbed stress field, are the orientation and relative magnitudes of the far field stress $\sigma_R$.

If field measurements are known at some given observation points (*e.g.*, displacement, strain and/or stress, fractures orientation, secondary fault planes that formed in the vicinity of major faults, etc.), then it is possible to recover the triple ($\alpha_1$, $\alpha_2$, $\alpha_3$), and therefore also recover the tectonic stress $\sigma_R$ and the corresponding tectonic regime (see Appendix A, below). The next section describes the method of resolution and the cost functions used to minimize cost for different types of data sets 302.

<u>Method of resolution</u>

Applying a Monte Carlo technique allows the parameters ($\alpha_1$, $\alpha_2$, $\alpha_3$) to be found, which minimize the cost functions when given three independent far field stresses (see Equation 15). However, even if ($\alpha_1$, $\alpha_2$, $\alpha_3$) imply a 3-dimensional parameters-space, this space can be reduced to two dimensions (namely, to the parameters $\theta$ and $k$), the conversion being given by Equation (20) and ($\theta$, $k$) $\rightarrow$ ($\sigma_{00}$, $\sigma_{01}$, $\sigma_{11}$) $\rightarrow$ ($\alpha_1$, $\alpha_2$, $\alpha_3$), where, in Equations (21):

$$\begin{cases} \sigma_{00} = \cos^2 \theta + k \sin^2 \theta \\ \sigma_{01} = (k-1)\cos \theta \sin \theta \\ \sigma_{11} = \cos^2 \theta + k \sin^2 \theta \end{cases} \qquad (21)$$

(see also FIG. 4(c) and Algorithm 1 for a detailed description). Consequently, the searching method (the search for optimized parameters) is accelerated by reducing the parameters-space by one dimension.

A simple sampling method can be performed by considering a two-dimensional rectangular domain for which the axes correspond to $\theta$ and $k$. The 2D-domain is sampled randomly with $n_p$. points, and the associated cost function (to be defined in the coming sections) is used to determine the point of minimum cost. A refinement is then created around the selected point and the procedure is repeated with a smaller domain. Algorithm (1) depicts a simplified version of the example procedure, for which there is no refinement. The example sampling method presented here can be greatly optimized by various techniques.

ALGORITHM (1): Paleostress Estimation

---

**Input**: Faults geometry

**Input**: Data set

**Output**: $\sigma_R$ // the estimated paleostress

**Initialize**: Compute 3 simulations using 3 linearly independent

$\sigma_R^{(i)}$ $(1 \le i \le 3)$ and the faults geometry. Store the resulting displacement and

stress fields at data points, and the displacement discontinuity at faults, if desired.

**Let** $c = 1$ // initial cost

**Let** $\alpha = (0,0,0,)$ // initial $(\alpha)$ solution

**for** $i = 1\ to\ n_p$ do

    Randomly generate $\theta \in [-\frac{\pi}{2}, \frac{\pi}{2}]$

    Randomly generate $k \in [-10,10]$

    // Convert $(\theta, k) \in \Re^2$ to $(\alpha) \in \Re^3$

    Compute $R_\theta$ using Equation (6)

    Compute $\sigma_R(\theta, k)$ using Equation (9)

    Compute $\alpha$ using Equation (20)

    // Compute the corresponding cost

    $d = cost(\alpha, data\ set)$

    **if** $d \le c$ **then**

        $\bar{\alpha} = \alpha$

        $c = d$

**end**

**end**

$$\sigma_R = \sum_{i=1}^{3} \bar{\alpha}_i \, \sigma_R^i$$

Another Formulation of the Monte-Carlo 2D Domain

Other formulations of the Monte-Carlo 2D Domain may be used without departing from the scope of the claims. For example, below is another formulation that may be used.

In the formulation below, $\theta$ is defined as a value between 0 and $\pi$, rather than between $-\pi/2$ and $\pi/2$. Further, $\theta = 0$ corresponds to the north and the angle is defined clockwise.

Equation (2) above may be changed to the following Equation (2'):

$$\boldsymbol{\sigma_R} = R_{\theta,\varphi,\Psi} \begin{bmatrix} \sigma_h & & \\ & \sigma_H & \\ & & \sigma_v \end{bmatrix} R_{\theta,\varphi,\Psi}^T \qquad (2')$$

Equation (3) above may be changed to the following Equation (3'), where $R_\theta$ is the rotation matrix along the vertical axis (clockwise) with $\theta \in [0,\pi]$, :

$$\boldsymbol{\sigma_R} = R_\theta \begin{bmatrix} \sigma_h - \sigma_v & \\ & \sigma_H - \sigma_v \end{bmatrix} R_\theta^T \qquad (3')$$

Using the above embodiment, the definition of a regional stress has three unknowns, namely $(\sigma_h - \sigma_v)$, $(\sigma_H - \sigma_v)$, and $\theta$. Expressing (2') using $\sigma_1$, $\sigma_2$ and $\sigma_3$ for the three Andersonian fault regimes (Anderson, 1905), factorizing with $(\sigma_1 - \sigma_3)$ and introducing the stress ratio, $R = (\sigma_2 - \sigma_3) / (\sigma_1 - \sigma_3) \in [0, 1]$, the following Equation (22) results as follows:

$$\boldsymbol{\sigma_R} = \begin{cases} (\sigma_1 - \sigma_3)R_\theta \begin{bmatrix} -1 & \\ & R-1 \end{bmatrix} R_\theta^T & \text{for Normal fault regime} \\[2mm] (\sigma_1 - \sigma_3)R_\theta \begin{bmatrix} -R & \\ & 1-R \end{bmatrix} R_\theta^T & \text{for Wrench fault regime} \\[2mm] (\sigma_1 - \sigma_3)R_\theta \begin{bmatrix} R & \\ & 1 \end{bmatrix} R_\theta^T & \text{for Thrust fault regime} \end{cases} \qquad (22)$$

By changing R to R' as shown in equation (23) as follows, a unique stress shape parameter R' is created for the three fault regimes together:

$$R' \in [1,3] = \begin{cases} R & \in [0,1] & \text{for Normal fault regime} \\ 2-R & \in [1,2] & \text{for Wrench fault regime,} \\ 2+R & \in [2,3] & \text{for Thrust fault regime} \end{cases} \qquad (23)$$

Omitting the scaling factor $(\sigma_1 - \sigma_3)$, the regional stress tensor in (23) is defined with two parameters, $\theta$ and R'. This definition may be used as shown below to determine $(\theta, R')$ according to the data utilized.

Continuing with another formulation, Equation (7) above is not used in an example formulation in one or more embodiments. Further, Equation 10 is replaced with the following equation (10'):

$$\begin{cases} 0 \leq \theta \leq \pi \\ 0 \leq R' \leq 3 \end{cases} \tag{10'}$$

Equation (12) becomes Equation (12') as follows:

$$(\theta, R') \rightarrow (\sigma_{00}, \sigma_{01}, \sigma_{11}) \rightarrow (\alpha_1, \alpha_2, \alpha_3) \tag{12'}$$

Further, equation (13) and (21) are replaced by:

$$\begin{cases} \sigma_{00} = \sin\beta - \cos\beta \, \cos^2\theta \\ \sigma_{01} = \cos\beta \, \sin\theta \, \cos\theta \\ \sigma_{00} = \sin\beta - \cos\beta \, \sin^2\theta \end{cases} \tag{13'}$$

with $\beta$ being an angle defined as:

$$\begin{cases} \beta = \tan^{-1}\left(\frac{R'-1}{R'}\right) & \text{for normal fault regime} \\ \beta = \tan^{-1}(R'-1) & \text{for strike} - \text{slip fault regime} \\ \beta = \tan^{-1}\left(\frac{1}{3-R'}\right) & \text{for thrust fault regime} \end{cases}$$

Further, Algorithm (1) may be changed to the following Algorithm (1') :

ALGORITHM (1'): Paleostress Estimation

**Input**: Faults geometry

**Input**: Data set

**Output**: $\sigma_R$ // the estimated paleostress

**Initialize**: Compute 3 simulations using 3 linearly independent

$\sigma_R^{(i)}$ ($1 \leq i \leq 3$) and the faults geometry. Store the resulting displacement and

stress fields at data points, and the displacement discontinuity at faults, if desired.

**Let** $c = 1$ // initial cost

**Let** $\alpha = (0,0,0,)$ // initial ($\alpha$) solution

**for** $i = 1 \, to \, n_p$ do

    Randomly generate $\theta \in [0, \pi]$

    Randomly generate $R' \in [0,3]$

    // Convert $(\theta, R') \in \mathbb{R}^2$ to $\alpha \in \mathbb{R}^3$

    Compute $\sigma_R(\theta, R')$ using equation (13')

    Compute $\alpha$ using equation (20)

    // Compute the corresponding cost

    $d = cost(\alpha, data\ set)$

    **if** $d \leq c$ **then**

        $\bar{\alpha} = \alpha$

        $c = d$

    **end**

**end**

$$\sigma_R = \sum_{i=1}^{3} \bar{\alpha}_i \sigma_R^i$$

While the above discussion presents one example formulation, other formulations may be used without departing from the scope of the claims.

Data Sets

The particularity of this method considers that many different kinds of data sets 302 can be used to constrain the inversion. Two groups of data are presented in the following sections: the first one includes orientation information and the second includes displacement and/or stress magnitude information.

Without magnitude information from the data set

For opening fractures (*e.g.*, joints, veins, dikes) the orientation of the normal to the fracture plane indicates the direction of the least compressive stress direction in 3D ($\sigma_3$). Similarly, the normals to pressure solution seams and stylolites indicate the direction of the most compressive stress ($\sigma_1$). Using measurements of the orientations of fractures, pressure solution seams, and stylolites allows the stress and fracture modeling engine 102 to recover the tectonic regime which generated such features.

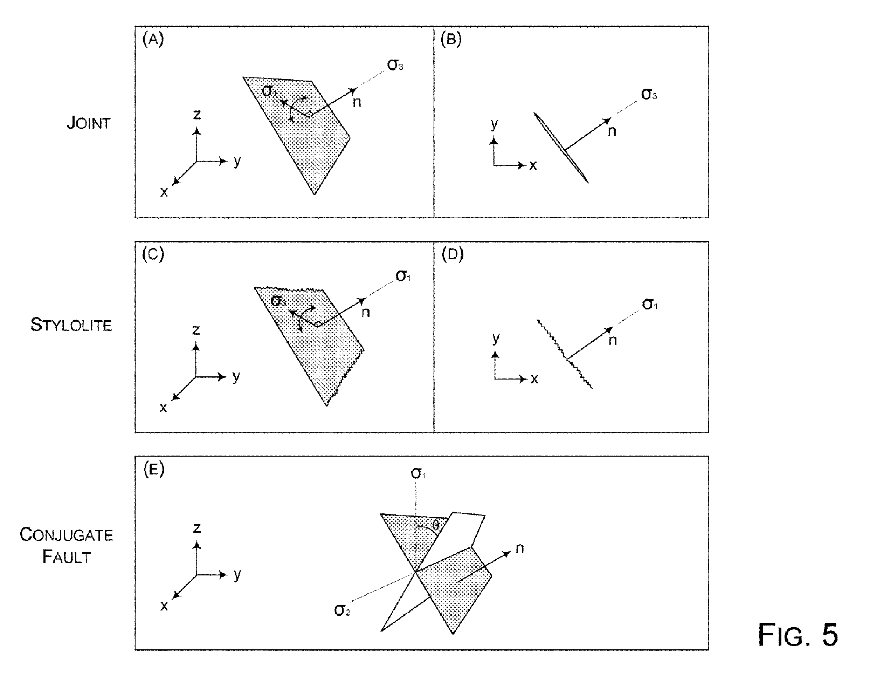

At any observation point $P$, the local perturbed stress field can be determined easily from a numerical point of view by using three linearly independent simulations. FIG. 5 shows fracture and conjugate fault planes. FIG. 5(a) shows orientation of $\sigma_3$ relative to an opening fracture (joints, veins, dikes) given by its normal $\vec{n}$ in 3D. FIG. 5(b) shows the same as FIG. 5(a) except for an orientation of $\sigma_3$ relative to a joint given by its projected normal $\vec{n}$ (*e.g.*, trace on outcrop). FIG. 5(c) and FIG. 5(d) show the same as FIG. 5(a) and FIG. 5(b) except shown for a stylolite. FIG. 5(e) shows orientation of $\sigma_2$ and $\sigma_1$, relative to conjugate fault-planes given by one of the normal $\vec{n}$ in 3D and the internal friction angle $\theta$. The goal is to determine the best fit of the far field stress $\sigma_R$, and therefore parameters ($\alpha_1$, $\alpha_2$, $\alpha_3$), given some orientations of opening fracture planes for which the normals coincide with the directions of the least compressive stress $\sigma_3^P$ at $P$, or equivalently for which the plane of the fracture contains the most compressive stress ($\sigma_1$), as in FIG. 5(a) and FIG. 5(b).

By varying ($\alpha_1$, $\alpha_2$, $\alpha_3$), the state of stress at any observation point P can be computed quickly using the three precomputed models. The cost function to minimize is given in Equation (22):

$$f_{frac}(\alpha_1, \alpha_2, \alpha_3) = \frac{1}{2m} \sum_P ((\vec{\sigma_1^P} . \vec{n^P})^2 + (\vec{\sigma_2^P} . \vec{n^P})^2)^{1/2} \qquad (22)$$

where "." is the dot-product, $\vec{n}$ is the normal to a fracture plane, and $m$ is the number of observation points.

The minimization of a function of the three parameters is expressed by Equation (23):

$$F_{frac} = \min_{\alpha_1, \alpha_2, \alpha_3} \{ f_{frac}(\alpha_1, \alpha_2, \alpha_3) \} \qquad (23)$$

Similarly, for pressure solution seams and stylolites, the cost function is defined as in Equation (22) using the least compressive stress $\sigma_3$ as in Equation (24) (see FIG. 5 (c) and FIG. 5 (d) ) :

$$f_{styl}(\alpha_1, \alpha_2, \alpha_3) = \frac{1}{2m} \sum_P ((\vec{\sigma_3^P} . \vec{n^P})^2 + (\vec{\sigma_2^P} . \vec{n^P})^2)^{1/2} \qquad (24)$$

Using secondary fault planes

The orientation of secondary fault planes that develop in the vicinity of larger active faults may be estimated using a Coulomb failure criteria, defined by Equation (25):

$$\tan(2\theta) = 1/\mu \qquad (25)$$

where $\theta$ is the angle of the failure planes to the maximum principal compressive stress $\sigma_1$ and $\mu$ is the coefficient of internal friction. Two conjugate failure planes intersect along $\sigma_2$ and the fault orientation is influenced by the orientation of the principal stresses and the value of the friction.

The cost function is therefore defined by Equation (26):

$$f_{fault}(\alpha_1, \alpha_2, \alpha_3) = \frac{1}{2m}\sum_P \left[ (\vec{\sigma}_2^P . \vec{n}^P)^2 + \left( \frac{|sin^{-1}(\vec{\sigma}_1^P . \vec{n}^P)| - \theta}{\pi} \right)^2 \right]^{1/2} \tag{26}$$

where $\sigma_1$ is the direction of the most compressive stress and $\sigma_2$ is the direction of the intermediate principal stress. The first term of the right hand side in Equation (26) maintains an orthogonality between the computed $\sigma_2$ and the normal of the fault plane, whereas the second term ensures that the angle between the computed $\sigma_1$ and the fault plane is close to $\theta$ (see FIG. 5(e)).

Example 1: Normal and thrust fault

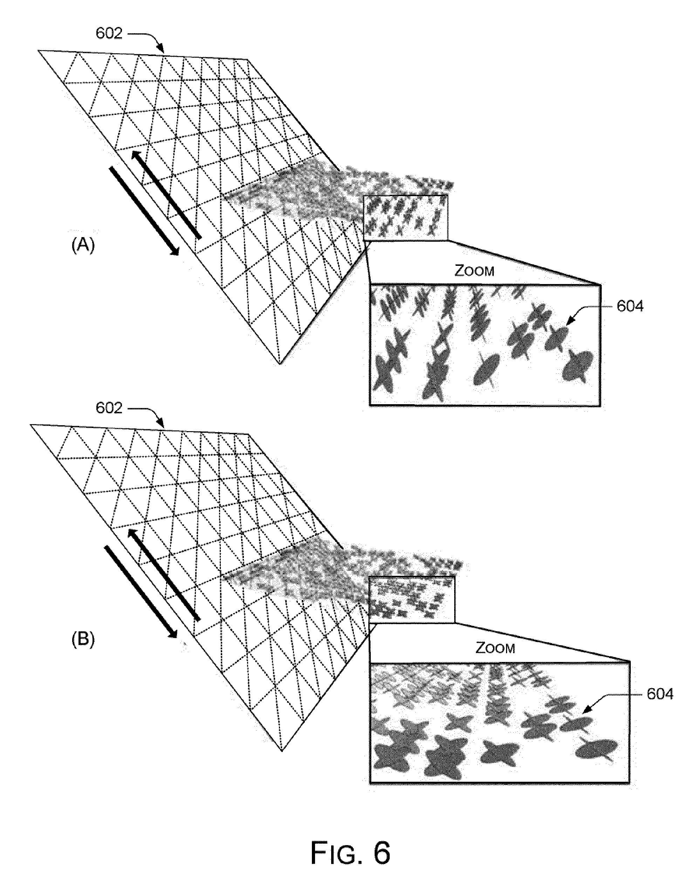

FIG. 6 shows a synthetic example using an inclined planar fault as one of two conjugate fault planes selected randomly. The inclination of the two conjugate fault planes is presented for a normal fault configuration (FIG. 6(a)) and a thrust fault configuration (FIG. 6(b)). Dip-azimuth and dip-angle of each conjugate fault plane are used to perform the inversion and the internal friction angle is $\theta$ = 30. The main active fault is represented by the inclined rectangular plane 602.

Initially, the model is constrained by a far field stress at some observation points 604, where the two conjugate planes are computed using an internal friction angle of 30 degrees. Then, for each observation point 604, one of the conjugate fault planes is chosen randomly and used as input data for the stress inversion.

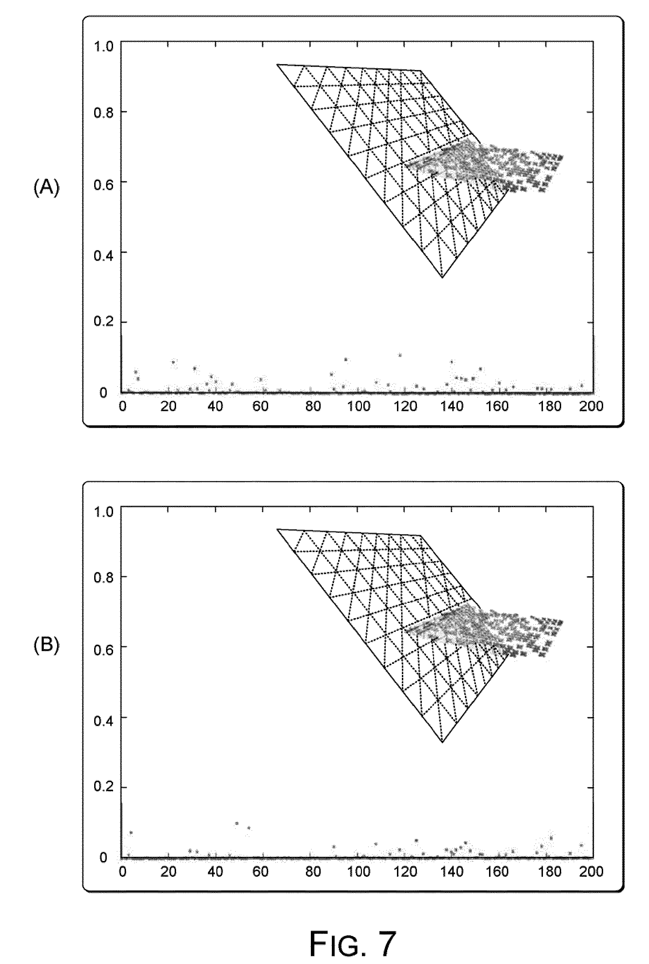

FIG. 7 shows the cost function for the synthetic example from FIG. 6. FIG. 7(a) shows the cost function for the normal fault, and FIG. 7(b) shows the cost function for the thrust fault. In both cases, the recovered regional stress tensor, displacement on fault, and predicted conjugate fault planes provide a good match with the initial synthetic model.

Using fault striations

In the case of fault striations, the cost function is defined as in Equation (27):

$$f_{stri}(\alpha_1, \alpha_2, \alpha_3) = \frac{1}{m}\sum_P (1 - (1 - \vec{d}_e^c . \vec{d}_e^m)^2)^{1/2} \tag{27}$$

where $\vec{d}_e^c$ and $\vec{d}_e^m$ represent the normalized slip vector from a simulation and the measured slip vector, respectively.

Data sets containing magnitude information

The magnitude of displacements may be used to determine the stress orientation, as well as the magnitude of the remote stress tensor, instead of just the principal stress ratio.

To do so, the procedure is similar to that described previously. However, given Equations (15) and (16), it is evident that there exists a parameter $\delta$ for which the computed displacement discontinuity on faults and the displacement, strain and stress fields at observation points scale linearly with the imposed far field stress. In other words, as in Equation (28):

$$\begin{cases} \delta\sigma_R \Rightarrow \delta b_e \\ \delta\sigma_R \Rightarrow \delta u_p \\ \delta\sigma_R \Rightarrow \delta\varepsilon_p \\ \delta\sigma_R \Rightarrow \delta\sigma_p \end{cases} \tag{28}$$

This leads to the following property:

Property 1: Scaling the far field stress by $\delta \in$ R scales the displacement discontinuity on faults as well as the displacement, strain, and stress fields at observation points by $\delta$.

Using this property, one or more measurements at data points (*e.g.*, all measurements) are globally normalized before any computation and the scaling factor is noted (the simulations are also normalized, but the scaling factor is irrelevant). After the system is solved, the recovered far field stress, displacement and stress fields are scaled back by a factor of $\delta_m^{-1}$.

Using GPS data

In the case of a GPS data set, the cost function is defined in Equation (29):

$$f_{gps}(\alpha_1, \alpha_2, \alpha_3) = \frac{1}{2m} \sum_P \left[ \left( 1 - \frac{\vec{u}_P^m \cdot \vec{u}_P^c}{\|\vec{u}_P^c\| \|\vec{u}_P^m\|} \right)^2 + \left( 1 - \frac{\|\vec{u}_P^m\|}{\|\vec{u}_P^c\|} \right)^2 (\vec{u}_p^c - \vec{u}_p^m)^2 \right]^{1/2} \quad (29)$$

where $\vec{u}_P^m$ is the globally normalized measured elevation changed at point $P$ from the horizon and $\vec{u}_P^c$ is the globally normalized computed elevation change for a given set of parameters ($\alpha_1$, $\alpha_2$, $\alpha_3$). The first term on the right hand side in Equation (29) represents a minimization of the angle between the two displacement vectors, whereas the second term represents a minimization of the difference of the norm.

Using InSAR data

When using an InSAR data set, there may be two possibilities. Either the *global* displacement vectors of the measures are computed using the displacement $u$ along the direction of the satellite line of sight $s$, in which case Equation (30) is used:

$$\vec{u}_P^m = \vec{u}_{insar} = u.\vec{s} \quad (30)$$

and the same procedure that is used for the GPS data set (above) is applied with the computed $\vec{u}_{P,}^c$, or, the computed displacement vectors are computed *along* the satellite line of sight, in which case Equation (31) is used:

$$u_P^c = \vec{u}.\vec{s} \quad (31)$$

where "." is the dot product. The cost function is consequently given by Equation (32):

$$f_{insar}(\alpha_1, \alpha_2, \alpha_3) = \frac{1}{m} \sum_P (1 - \left( \frac{u_P^c}{u_P^m} \right)^2)^{1/2} \quad (32)$$

Example

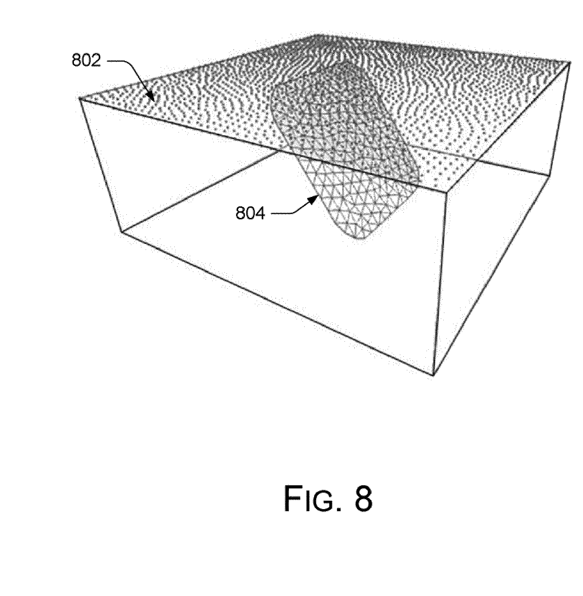

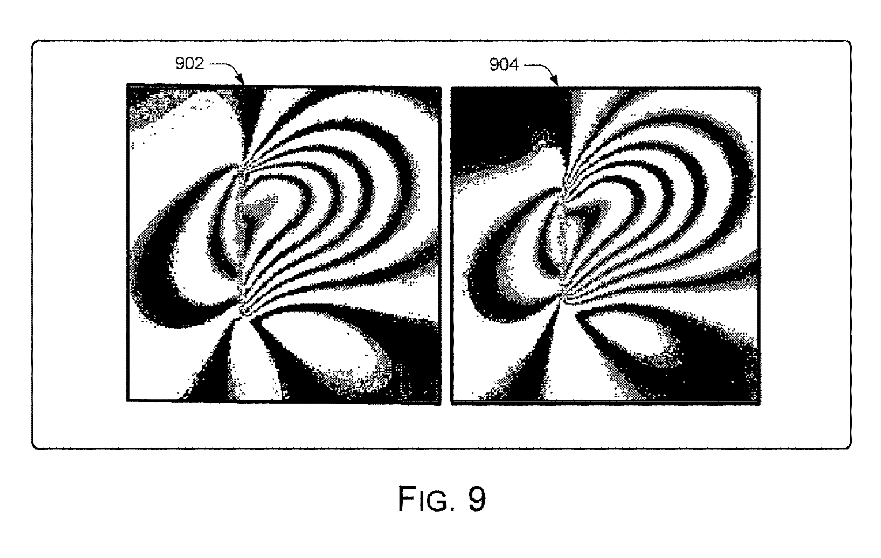

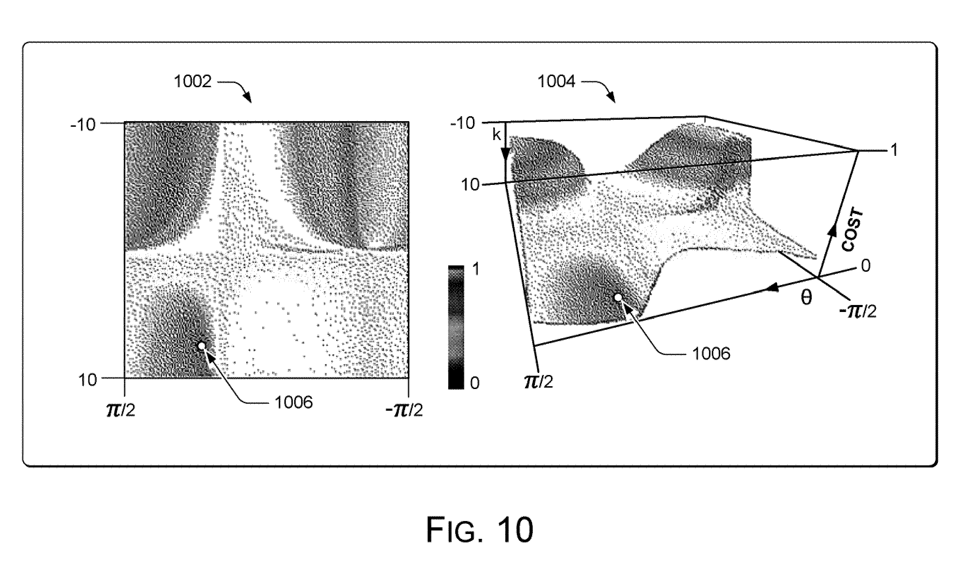

Figs. 8, 9, and 10 present a synthetic example using an InSAR data set. FIG. 8 shows a model configuration showing the InSAR data points 802 as well as the fault surface 804. FIG. 9 shows a comparison of the fringes from the original InSAR grid 902 and the recovered InSAR grid 904. FIG. 10 shows a plot of the cost surface, as a function of $\theta$ (x-axis) and $k$ (y-axis). On the left is a top view 1002 of the plot, and on the right is a front perspective view 1004 of the plot. The minimized cost solution 1006 in each view is marked by a small white circle (1006).

To utilize an InSAR data set, a forward model is run using one fault plane 804 and one observation grid (FIG. 8) at the surface of the half-space (see surface holding the data points 802). A satellite direction is selected, and for each observation point 802, the displacement along the satellite line of sight is computed. Then, an example stress and fracture modeling method described herein is applied using the second form of the InSAR cost function given in Equation (32). FIG. 9 compares the original interferogram 902 (left) to the recovered interferogram 904 (right). FIG. 10 shows how complex the cost surface can be, even for a simple synthetic model. In one implementation, the cost surface was sampled with 500,000 data points 802 (number of simulations), and took 18 seconds on an average laptop computer with a 2GHz processor and with 2GB of RAM running on Linux Ubuntu version 8.10, 32 bits.

Using a flattened horizon

Using the mean plane of a given seismic horizon (flattened horizon), the stress and fracture modeling engine 102 first computes the change in elevation for each point making the horizon. Then, the GPS cost function is used, for which the $u_z$ component is provided, giving Equation (33):

$$f_{horizon}(\alpha_1, \alpha_2, \alpha_3) = \frac{1}{m} \sum_P \left(1 - \left(\frac{u_P^c}{u_P^m}\right)^2\right)^{1/2} \qquad (33)$$

If pre- or post-folding of the area is observed, the mean plane can no longer be used as a proxy. Therefore, a smooth and continuous fitting surface has to be constructed which remove the faulting deformations while keeping the folds. Then, the same procedure as for the mean plane is used to estimate the paleostress. In some circumstances and prior to defining the continuous fitting surface, a method may filter the input horizon from noises possessing high frequencies, such as corrugations and bumps, while preserving natural deformations.

Example

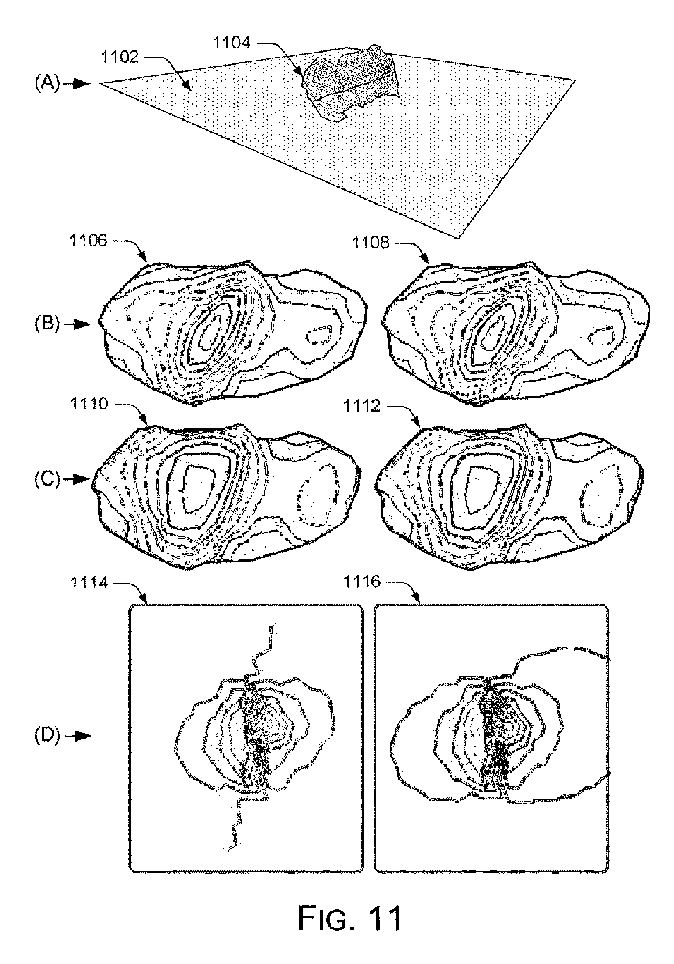

FIG. 11 shows results when applying an example stress and fracture modeling method to a synthetic example using a flattened horizon. FIG. 11(a) presents a model configuration showing the horizon 1102 and the fault surface 1104. FIG. 11(b) shows a comparison of the original dip-slip 1106 (left) and the recovered dip-slip 1108 (right). FIG. 11 (c) shows a comparison of the original strike-slip 1110 (left) and the recovered strike-slip 1112 (right). FIG. 11(d) shows original vertical displacement 1114 (left) from the flattened horizon (left) and recovered vertical displacement 1116 (right) from the flattened horizon.

In the example shown in FIG. 11, a complex shaped fault is initially constrained by a far field stress, and consequently slips to accommodate the remote stress. At each point of an observation plane cross-cutting the fault, the stress and fracture modeling engine 102 computes the resulting displacement vector and deforms the grid accordingly. Then, inversion takes place using the fault geometry. After flattening the deformed grid, the change in elevation for each point is used to constrain the inversion and to recover the previously imposed far field stress as well as the fault slip and the displacement field. The comparison of the original and inverted dip-slip (FIG. 11(b)) and strike-slip (FIG. 11(c)) show that they match well (same scale). A good match is also observed for the displacement field at the observation grid (FIG. 11(d)).

Using dip-slip information

When dip-slip data is used, the cost function is defined as in Equation (34):

$$f_{ds}(\alpha_1, \alpha_2, \alpha_3) = \frac{1}{m} \sum_P \left(1 - \left(\frac{b_e^c}{b_e^m}\right)^2\right)^{1/2} \qquad (34)$$

where $b_e^m$ is the measured dip-slip magnitude for a triangular element $e$, and $b_e^c$ is the computed dip-slip magnitude.

Using available information

The example stress and fracture modeling engine 102 can combine the previously described cost functions to better constrain stress inversion using available data (*e.g.*, all available data, including, without limitation, fault and fracture plane orientation data, GPS data, InSAR data, flattened horizons data, dip-slip measurements from seismic reflection, fault striations, etc.). Furthermore, data can be weighted differently, and each datum can also support a weight for each coordinate.

Multiple tectonic events

For multiple tectonic events, it is possible to recover the major ones, *e.g.*, those for which the tectonic regime and/or the orientation and/or magnitude are noticeably different. Algorithm (2), below, presents a way to determine different events from fracture orientation (joints, stylolites, conjugate fault planes) measured along well bores.

After doing a first simulation, a cost is attached at each observation point which shows the confidence of the recovered tectonic stress relative to the data attached to that observation point. A cost of zero means a good confidence, while a cost of one means a bad confidence. See FIG. 7 for an example plot of the cost. By selecting data points that are under a given threshold value and running another simulation with these points, it is possible to extract a more precise paleostress value. Then, the remaining data points above the threshold value are used to run another simulation with the paleostress state to recover another tectonic event. If the graph of the new cost shows disparities, the example method above is repeated until satisfactory results are achieved. During the determination of the tectonic phases, the observation points are classified in their respective tectonic event. However, the chronology of the tectonic phases remains undetermined.

---

ALGORITHM (2): Detecting Multiple Tectonic Events

---

**Input:** $\epsilon$ as a user threshold in $[0, 1]$

**Input:** $S$ = fractures from wells

**Let:** $T = \emptyset$

**while** $S \neq \emptyset$ **do**

> *Simulations*: Compute the cost for each fracture in $S$
>
> if max($cost$) < $\epsilon$ then
>
>> Detect a tectonic event $\sigma_R$ for fractures in $S$
>>
>> **if** $T = \emptyset$ **then**
>>
>>> **Terminate**
>>
>> **else**
>>
>>> $S = T$
>>>
>>> $T = \emptyset$
>>>
>>> **continue**
>>
>> **end**
>
> $S$ = fractures below $\epsilon$
>
> $T +=$ fractures above $\epsilon$

**end**

Seismic interpretation quality control

It is useful to have a method for quality control (QC) for interpreted faults geometries from seismic interpretation. The basic idea is to use the fracture orientations from well bores to recover the far field stress and the displacement discontinuities on active faults. Then, the computed displacement field is used to deform the initially flattened horizons. The geometry of the resulting deformed horizons can be compared with the interpreted ones. If some mismatches are clearly identified (*e.g.*, interpreted uplift and computed subsidence), then the fault interpretation is possibly false. For example, an interpreted fault might dip in the wrong direction. Note that an unfolded horizon can be approximated by its mean plane, as described above in relation to flattened horizons.

Conclusion and perspectives

The example stress and fracture modeling engine 102 applies the property of superposition that is inherent to linear elasticity to execute real-time computation of the perturbed stress and displacement field around a complexly faulted area, as well as the displacement discontinuity on faults. Furthermore, the formulation executed by the example stress and fracture modeling engine 102 enables rapid paleostress inversion using multiple types of data such as fracture orientation, secondary fault planes, GPS, InSAR, fault throw, and fault slickenlines. In one implementation, using fracture orientation and/or secondary fault planes from well bores, the stress and fracture modeling engine 102 recovers one or more tectonic events, the recovered stress tensor being given by the orientation and ratio of the principal magnitudes. The example stress and fracture modeling engine 102 and associated methods can be applied across a broad range of applications, including stress interpolation in a complexly faulted reservoir, fractures prediction, quality control on interpreted faults, real-time computation of perturbed stress and displacement fields while doing interactive parameter estimation, fracture prediction, discernment of induced fracturing from preexisting fractures, and so forth.

In a variation, another application of the stress and fracture modeling engine 102 and associated methods is evaluation of the perturbed stress field (and therefore the tectonic event(s)) for recovering "shale gas." Since shale has low matrix permeability, gas production in commercial quantities may involve fractures to provide permeability. This may be done by hydraulic fracturing to create extensive artificial fractures around well bores, and therefore involves a good understanding of how fractures will propagate according to the perturbed stress field.

Example Methods

While the various blocks in these flowcharts are presented and described sequentially, one of ordinary skill will appreciate that some or all of the blocks may be executed in different orders, may be combined or omitted, and some or all of the blocks may be executed in parallel. Furthermore, the blocks may be performed actively or passively. For example, some blocks may be performed using polling or be interrupt driven in accordance with one or more embodiments. By way of an example, determination blocks may not involve a processor to process an instruction unless an interrupt is received to signify that condition exists in accordance with one or more embodiments. As another example, determination blocks may be performed by performing a test, such as checking a data value to test whether the value is consistent with the tested condition in accordance with one or more embodiments.

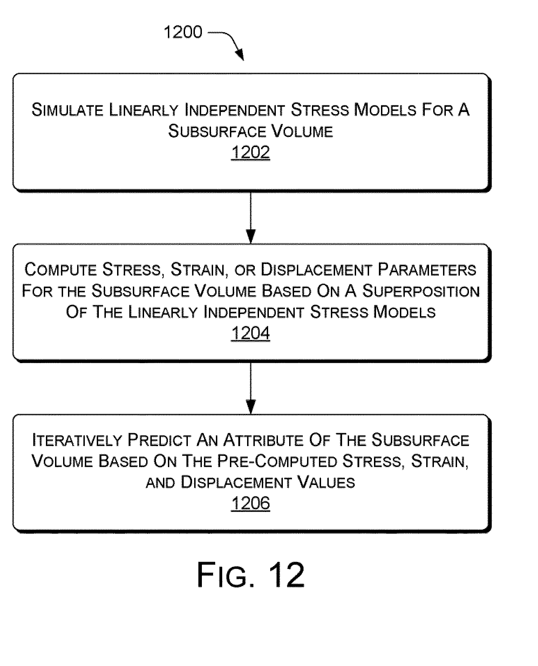

FIG. 12 shows an example method 1200 of stress and fracture modeling using the principle of superposition. In the flow diagram, the operations are summarized in individual blocks. The example method 1200 may be performed by hardware or combinations of hardware and software, for example, by the example stress and fracture modeling engine.

At block 1202, linearly independent stress models for a subsurface volume are simulated.

At block 1204, stress, strain, and/or displacement parameters for the subsurface volume are computed, based on a superposition of the linearly independent stress models.

At block 1206, an attribute of the subsurface volume is iteratively predicted based on the precomputed stress, strain, and/or displacement values.

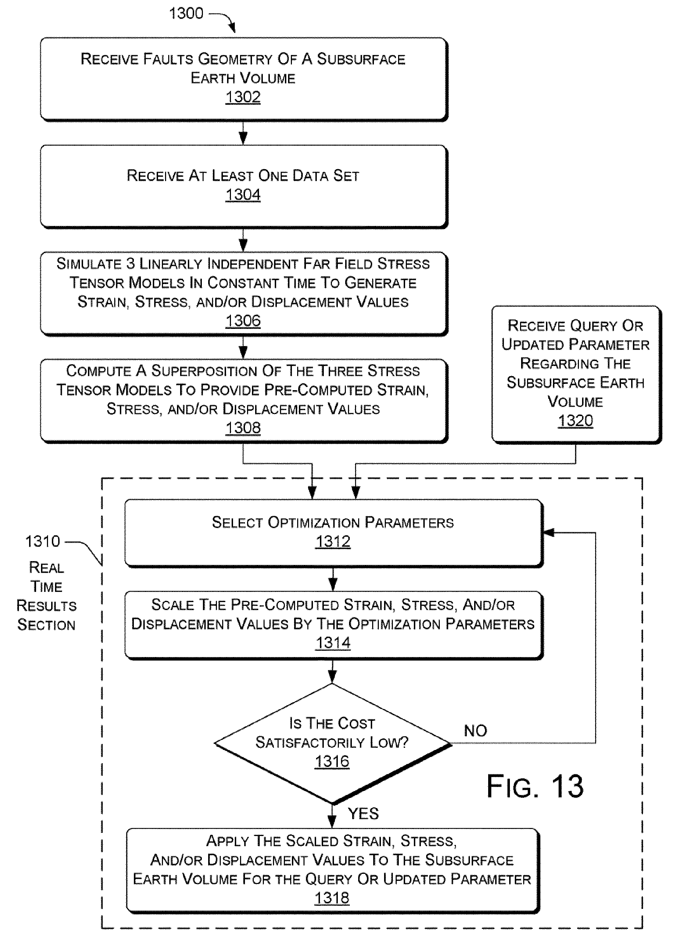

FIG. 13 shows an example method 1300 of stress and fracture modeling using the principle of superposition. In the flow diagram, the operations are summarized in individual blocks. The example method 1300 may be performed by hardware or combinations of hardware and software, for example, by the example stress and fracture modeling engine.

At block 1302, faults geometry for a subsurface earth volume is received.

At block 1304, at least one data set associated with the subsurface earth volume is also received.

At block 1306, three linearly independent far field stress tensor models are simulated in constant time to generate strain, stress, and/or displacement values.

At block 1308, a superposition of the three linearly independent far field stress tensor models is computed to provide precomputed strain, stress, and/or displacement values.

At block 1310, a post-process segment of the method commences, that can compute numerous real-time results based on the principle of superposition.

At block 1312, optimization parameters for each of the linearly independent far field stress tensor models are selected.

At block 1314, the precomputed stress, strain, and/or displacement values are scaled by the optimization parameters.

At block 1316, a cost associated with the scaled precomputed stress, strain, and/or displacement values is evaluated. If the cost is not satisfactory, then the method loops back to block 1312 to select new optimization parameters. If the cost is satisfactory, then the method continues to block 1318.

At block 1318, the scaled strain, stress, and/or displacement values are applied to the subsurface earth volume, *e.g.*, with respect to a query about the subsurface earth volume or in response to an updated parameter about the subsurface earth volume.

At block 1320, a query or updated parameter regarding the subsurface earth volume is received, that seeds or initiates generation of the post-process results in the real-time results section (1310) of the method 1300.

Stress domain diagram

FIG. 14 shows an example layout of a stress domain diagram 1410 without simulation results in one or more embodiments. As shown in FIG. 14, the stress domain diagram may have stress orientation axis 1404, such as on the y-axis, and a stress ratio axis 1406, such as on the x-axis. The stress orientation axis 1404 includes values for the orientation of the maximum principal horizontal stress (*e.g.,* "$\sigma_H$"). The stress ratio axis 1406 includes values for the stress ratio (*e.g.*, "Φ"). The stress ratio may be identified using the simulations discussed above or another simulation method for calculating the stress ratio may be used without departing from the scope of the claims.

In one or more embodiments, the stress ratio axis 1406 is divided into multiple regions, where each region is represents type of fault. Specifically, as shown in FIG. 14, the stress ratio axis 1406 may be partitioned into a normal fault region 1048 for locations in a normal fault, wrench fault region 1410 for locations in a wrench fault, and reverse fault region 1412 for locations in a reverse fault. When the stress ratio axis is partitioned into the multiple regions, the stress ratio may be expressed as Φ□, where Φ□ = Φ for a normal fault regime, Φ□ = 2- Φ for a wrench fault regime, and Φ□ = 2 + Φ for a reverse fault regime. In each of the aforementioned regimes, Φ is an element of the closed interval from 0 to 1. According to the best fit parameters ($\alpha_1$, $\alpha_2$, $\alpha_3$) and using equation (18) the stress ratio, $\Phi = (\sigma_2 - \sigma_3) / (\sigma_1 - \sigma_3)$, the stress regime (normal, wrench, reverse), as well as the orientation of the maximum principal stress $\sigma_H$ (given by θ) may be determined by using the principal decomposition of the stress tensor ($\sigma^R_{00}$, $\sigma^R_{01}$, $\sigma^R_{11}$.

In one or more embodiments, the stress ratio, stress orientation, and stress regime form a solution created by one or more simulations using observed data. Such observed data may be data gathered by one or more detection devices, such as sensors, in the field. In one or more embodiments, the value of a particular point (specified by a specific stress orientation value, specific stress ratio value, and fault regime) is the output or result of a cost function. The output specifies how close of a fit the stress orientation and stress ratio in the particular fault regime (i.e., the solution) is to the observed data. In other words, the output is a fitness value. In one or more embodiments, the value of the point is between 0 and 1 or 0% and 100%, where 1 or 100% indicates that the stress orientation and stress ratio for the particular fault regime is close to the actual solution. In other words, values approaching 1 or 100% identifies that the solution from simulation better or best fit to data gathered from the field. If the value is close to 0 or 0%, then the stress orientation and stress ratio for the particular fault regime is not close to the actual solution (i.e., may be a worse or worst fit value to data gathered from the field). Other encodings besides 0 to 1 or 0% to 100% may be used to define the fitness value without departing from the scope of the claims.

Further, in one or more embodiments, the stress domain diagram shows how good or bad of a fit particular points are to the actual data gathered from the field, and also provides a confidence level for the solution. Specifically, the higher localization of better and best fit values, the greater the confidence level in the solution. When better and best fit values are not localized, but rather dispersed, the confidence level in the solution is low. With low confidence, the user may determine that the solution is not accurate. For example, if multiple points on the stress domain diagram are close to the actual solution, but dispersed in different parts of the diagram, then the solution is deemed to be dispersed and the user has lower confidence in the solution. However, if multiple points on the stress domain diagram are close to the actual solution, and within the vicinity of each other, then the solution may be deemed to be localized and the user has a high confidence in the solution.

In one or more embodiments, the values of the particular points are coded on the stress domain diagram. Specifically, each value may be assigned a corresponding color or grayscale value. The coding enables a user to quickly identify the actual solution and how localized the actual solution is.

FIG. 15 shows a flowchart for creating the stress domain diagram in one or more embodiments. While the various blocks in these flowcharts are presented and described sequentially, one of ordinary skill will appreciate that some or all of the blocks may be executed in different orders, may be combined or omitted, and some or all of the blocks may be executed in parallel. Furthermore, the blocks may be performed actively or passively. For example, some blocks may be performed using polling or be interrupt driven in accordance with one or more embodiments. By way of an example, determination blocks may not involve a processor to process an instruction unless an interrupt is received to signify that condition exists in accordance with one or more embodiments. As another example, determination blocks may be performed by performing a test, such as checking a data value to test whether the value is consistent with the tested condition in accordance with one or more embodiments.

At block 1500, inversion is performed using a definition of faults and observed data to obtain multiple solutions. Specifically, data may be obtained from the field. Data may be obtained, for example, by sensors or other detection devices located in the field. Using the equations above, and the definition of faults and observed data as inputs, inversion is performed to obtain one or more solutions. Each solution includes a stress ratio value and a stress orientation value.

At block 1502, the cost function is selected based on the type of data in one or more embodiments. As discussed above, different cost functions may be used depending on the type of data sets. For example, for a GPS data set, the selected cost function may be the one defined in equation (29). By way of another example, for an InSAR data set, the selected cost function may be the one defined in equation (32). Similarly, other costs functions may be used based on the type of data.

At block 1504, the stress ratio value and the orientation value are obtained from the solution in one or more embodiments. As discussed above, the stress ratio value and the orientation value are values of a particular point related to the stress domain diagram.

At block 1506, using a cost function, the stress ratio value and orientation value are analyzed to obtain a result. Specifically, the cost function is executed using the stress ratio value and the orientation value as input. Using the cost function to perform the analysis may be performed as discussed above. In one or more embodiments, the analysis defines how well the stress orientation and the stress ratio match the actual or observed data. The value represents the cost c ($c \in [0, 1]$) for a given model (faults model + data to constrain the stress inversion). In one or more embodiments, a cost of 0 means a perfect prediction of the observed fractures for a given model, whereas a cost of 1 means that the given model did not at all predict the observed fractures.

At block 1508, the result is stored in one or more embodiments. The result may be stored, for example, in a cache, a temporary file, a permanent file, on a flash drive or another storage medium.

At block 1510, a determination is made whether to perform another analysis. As discussed above, multiple executions of the cost function are performed. Each execution results in a value for a particular point on the stress domain diagram.

If a determination is made to perform another analysis, then the flow may repeat starting with block 1504. Although not shown in FIG. 15, the flow may repeat starting with block 1502 to select a new cost function. In one or more embodiments, the analysis is performed for each solution and for each fault regime to obtain multiple results.

Continuing with FIG. 15, at block 1512, a stress domain diagram is generated using the results in one or more embodiments. Specifically, each result in a value of a particular point on the stress domain diagram. In one or more embodiments, the value is mapped to a particular color representing the value or a range of values. Thus, the orientation value and stress ratio value are used to identify the particular point for the solution, and the point is given the particular color defined by the result of the analysis in one or more embodiments. As discussed above, the particular color represents a fitness value as defined by the cost function. Further, the stress domain diagram is presented.

At block 1514, a determination is made whether a selection of a point on the stress domain diagram is received. Specifically, when a user views the stress domain diagram, the user may want further information about a particular solution.

At block 1516, if the selection of a point is received, then the selected point is identified in one or more embodiments.

At block 1518, one or more of fracture prediction, perturbed stress field, and displacement field are calculated for the selected point. Calculating the fracture prediction, perturbed stress field, and displacement field are discussed above.

In one or more embodiments, to calculate the fracture prediction as well as the perturbed stress field and displacement field, IBEM3D (discussed above in paragraph [0048]) may be used for forward modeling, using the selected point from the stress domain diagram. Specifically, the selected point gives the regional state of stress (stress ratio and orientation according to the north of the maximum principal horizontal stress) and therefore the initial boundary condition (applied far field stress) for the forward modeling. When the forward computation is completed, fracture prediction are performed in one or more embodiments. As an example, for a joint and at a given observation point, the perturbed stress tensor is computed using IBEM3D. The corresponding fracture plane has normal that coincides with the direction of $\sigma_3$, the minimum principal stress of this perturbed stress tensor. For secondary fault planes, the same procedure may be applied using the Coulomb failure criteria, leading to two possible failure planes (as discussed above in equation (25), paragraph [0078], and FIG. 5E).

At block 1520, one or more of fracture prediction, perturbed stress field, and displacement field are presented for the selected point. Specifically, the fracture prediction, perturbed stress field, and/or displacement field may be displayed for the user in one or more embodiments. At this stage, the user may continue to interact with the stress domain diagram. Thus, the stress domain diagram provides a mechanism for a user to understand and interact with the simulation results.

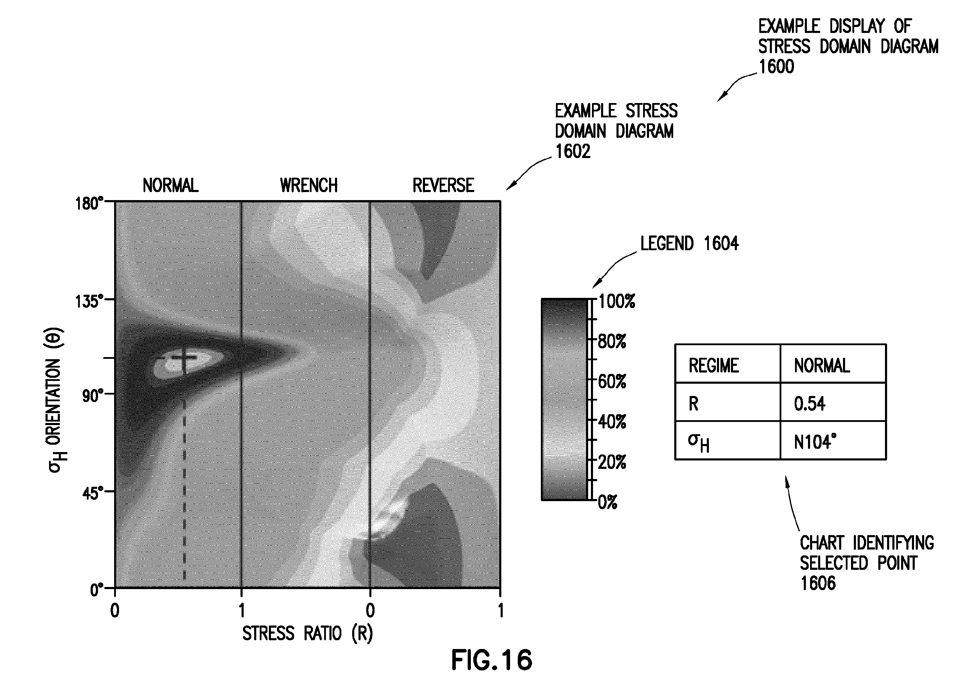

FIG. 16 shows an example display of a stress domain diagram 1600 in one or more embodiments. Specifically, FIG. 16 shows that which a user may view when the stress domain diagram is generated and a user has identified a selected point. As shown in FIG. 16, the example display 1600 may include the example stress domain diagram 1602, a legend 1604, and a chart identifying the selected point 1606. The legend 1604 defines what each color value in the example stress domain diagram 1602 represents. When a user identifies a particular point, such as the point selected on the example stress domain diagram 1602, the chart identifying the selected point 1606 may be presented to the user so that the user knows which point is selected.

In FIG. 16, the example stress domain diagram shows for a two dimensional of the state of stress for Andersonian fault regimes. The black cross represents the solution of a stress inversion for a given model configuration (*i.e.*, faults geometry and data sets). The X-axis and the Y-axis represent the stress ratio, $\Phi'$, and the orientation according to the North of the maximum principal horizontal stress, $\sigma_H$, respectively.

As shown in the example FIG. 16, a user may quickly view the solution and check the solutions validity. Further, the stress domain diagram 1602 also displays the worst fit for the provided model. Specifically, in the example, the user may immediately see that the solution is provided in Normal fault regime ($\Phi'$=0.54, $\sigma_H$=N104°) and that the worst fit is found in the reverse fault regime with $-N45° \leq \alpha\_H \leq N45°$.

Moreover, in one or more embodiments, a user may view the error around the solution using the stress domain diagram 1602 as shown in the example. In the example, in FIG. 16, a variation in the stress ratio has less effect than the same variation in the orientation as shown by the coding of the values and the legend. Further, as shown by the coding, the stress ratio and orientation that have the best fit values are localized around a particular point. Thus, a user may have confidence that the best fit values actually match the actual solution. As shown, the stress domain diagram 1602 provides fast insight as to the sensitivity of the parameters in the solution in one or more embodiments. Additionally, in one or more embodiments, the stress domain diagram 1602 allows the user to select a point in the diagram view, seemingly instantaneously, the corresponding fracture prediction, perturbed stress field and displacement field.

Conclusion

Although example systems and methods have been described in language specific to structural features and/or methodological acts, it is to be understood that the subject matter defined in the appended claims is not limited to the specific features or acts described. Rather, the specific features and acts are disclosed as example forms of implementing the claimed systems, methods, and structures.

Further, while the above description includes a limited number of embodiments, those skilled in the art, having benefit of this disclosure, will appreciate that other embodiments can be devised which do not depart from the scope of the claims.

Although only a few example embodiments have been described in detail above, those skilled in the art will readily appreciate that many modifications are possible in the example embodiments without materially departing from presenting stress domain. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures. It is the express intention of the applicant not to invoke 35 U.S.C. § 112, paragraph 6 for any limitations of any of the claims herein, except for those in which the claim expressly uses the words 'means for' together with an associated function.

**Claims**

1. A method for presenting a stress domain, comprising:

   analyzing, using a cost function, a plurality of stress ratio values and a plurality of orientation values to obtain a plurality of results;
   generating a stress domain diagram relating the plurality of stress ratio values and the plurality of orientation values to the plurality of results; and
   presenting the stress domain diagram.

2. The method of claim 1, further comprising:

   performing, using a fault definition and observed data, an inversion to obtain a plurality of solutions, wherein each solution of the plurality of solutions comprises a stress ratio value of the plurality of stress ratio values and an orientation value of the plurality of orientation values, and wherein the analyzing is performed independently for each solution of the plurality of solutions.

3. The method of claim 2, wherein the analyzing comprises determining, using the cost function, how closely a solution of the plurality of solutions fits the observed data.

4. The method of claim 1, wherein the stress domain diagram comprises an orientation axis for the plurality of orientation values and a stress ratio axis for the plurality of stress ratio values.

5. The method of claim 1, wherein each result of the plurality of results is a fitness value defined for a stress ratio value of the plurality of stress ratio values and an orientation value of the plurality of orientation values, and wherein each point of a plurality of points on the stress domain diagram relates the stress ratio value and the orientation value to the fitness value.

6. The method of claim 1, wherein the analyzing comprises computing at least one of a normal fault regime, a wrench fault regime, and a reverse fault regime, and wherein the stress diagram is partitioned into at least one of a normal fault region corresponding to the normal fault regime, a wrench fault region corresponding to the wrench fault regime, and a reverse fault region corresponding to the reverse fault regime.

7. The method of claim 1, wherein generating the stress domain diagram comprises, for each result of the plurality of results,:

   identifying a color corresponding to the result; and
   associating the color with a point of a plurality of points in the stress domain diagram.

8. The method of claim 1, further comprising:

   receiving a selection of a point from a plurality of points in the stress domain diagram;
   calculating, for the point, at least one value selected from a group consisting of a fracture prediction, a perturbed stress field, and a displacement field; and presenting the at least one value.

9. The method of claim 1, wherein each of the plurality of orientation values is a maximum principal horizontal stress.

10. A system for presenting a stress domain, comprising:

   a computer processor;
   a stress and fracture modeling engine executing on the computer processor and configured to:

   analyze, using a cost function, each of a plurality of stress ratio values and a plurality of orientation values to obtain a plurality of results;

   a display engine executing on the computer processor and configured to:

   generate a stress domain diagram relating the plurality of stress ratio values and the plurality of orientation values to the plurality of results.

11. The system of claim 10, wherein the stress domain diagram comprises an orientation axis for the plurality of orientation values and a stress ratio axis for the plurality of stress ratio values.

12. The system of claim 11, wherein each result of the plurality of results is a fitness value defined for a stress ratio value of the plurality of stress ratio values and an orientation value of the plurality of orientation values, and wherein each point of a plurality of points on the stress domain diagram relates the stress ratio value and the orientation value to the fitness value.

**13.** The system of claim 10, wherein stress diagram is partitioned into a normal fault region corresponding to a normal fault regime, a wrench fault region corresponding to a wrench fault regime, and the reverse fault region corresponding to a reverse fault regime, and wherein the analysis is performed for each of the normal fault regime, the wrench fault regime, and the reverse fault regime.

**14.** The system of claim 10, wherein the stress domain diagram is color coded according to a value of each result of the plurality of results.

**15.** The system of claim 10, wherein the display engine is further configured to:

receive a selection of a point from a plurality of points in the stress domain diagram; and
present at least one value selected from a group consisting of a fracture prediction, a perturbed stress field, and a displacement field, and
wherein the stress and fracture modeling engine is further configured to calculate, for the point, the at least one value.

**16.** A computer readable storage medium comprising computer readable program code embodied therein for:

analyzing, using a cost function, each of a plurality of stress ratio values and a plurality of orientation values to obtain a plurality of results;
generating a stress domain diagram relating the plurality of stress ratio values and the plurality of orientation values to the plurality of results; and
presenting the stress domain diagram.

**17.** The computer readable storage medium of claim 16, wherein the computer readable program code is further for:

performing, using a fault definition and observed data, an inversion to obtain a plurality of solutions, wherein each solution of the plurality of solutions comprises a stress ratio value of the plurality of stress ratio values and an orientation value of the plurality of orientation values, and wherein the analyzing is performed independently for each solution of the plurality of solutions.

**18.** The computer readable storage medium of claim 17, wherein the analyzing comprises determining, using the cost function, how closely a solution of the plurality of solutions fits observed data.

**19.** The computer readable storage medium of claim 16, wherein generating the stress domain diagram comprises, for each result of the plurality of results,:

identifying a color corresponding to the result; and
associating the color with a point of a plurality of points in the stress domain diagram.

**20.** The computer readable storage medium of claim 16, wherein the computer readable program code is further for:

receiving, on the stress domain diagram, a selection of a point from a plurality of points in the stress domain diagram;
calculating, for the point, at least one value selected from a group consisting of a fracture prediction, a perturbed stress field, and a displacement field; and
presenting the at least one value.

FIG. 1

EP 2 639 604 A2

FIG.2

STRESS AND FRACTURE MODELING ENGINE
102

DATA SETS 302

RESULTS
312

INITIALIZATION ENGINE
304

SELECT $\alpha_i$

OPTIMIZATION PARAMETERS
SELECTOR 308

$\vec{b}$ $\vec{u}$ $\varepsilon$ $\sigma$

COST ASSESSMENT
ENGINE
310

YES

STRESS MODEL
SIMULATORS
306

$O(p)$

NO

FIG. 3

EP 2 639 604 A2

FIG. 4

FIG. 5

FIG. 6

(A)

(B)

FIG. 7

FIG. 8

EP 2 639 604 A2

FIG. 9

FIG. 10

FIG. 11

1200

SIMULATE LINEARLY INDEPENDENT STRESS MODELS FOR A
SUBSURFACE VOLUME
1202

COMPUTE STRESS, STRAIN, OR DISPLACEMENT PARAMETERS
FOR THE SUBSURFACE VOLUME BASED ON A SUPERPOSITION
OF THE LINEARLY INDEPENDENT STRESS MODELS
1204

ITERATIVELY PREDICT AN ATTRIBUTE OF THE SUBSURFACE
VOLUME BASED ON THE PRE-COMPUTED STRESS, STRAIN,
AND DISPLACEMENT VALUES
1206

FIG. 12

1300

RECEIVE FAULTS GEOMETRY OF A SUBSURFACE
EARTH VOLUME
1302

RECEIVE AT LEAST ONE DATA SET
1304

SIMULATE 3 LINEARLY INDEPENDENT FAR FIELD STRESS
TENSOR MODELS IN CONSTANT TIME TO GENERATE
STRAIN, STRESS, AND/OR DISPLACEMENT VALUES
1306

RECEIVE QUERY OR
UPDATED PARAMETER
REGARDING THE
SUBSURFACE EARTH
VOLUME
1320

COMPUTE A SUPERPOSITION OF THE THREE STRESS
TENSOR MODELS TO PROVIDE PRE-COMPUTED STRAIN,
STRESS, AND/OR DISPLACEMENT VALUES
1308

1310

REAL
TIME
RESULTS
SECTION

SELECT OPTIMIZATION PARAMETERS
1312

SCALE THE PRE-COMPUTED STRAIN, STRESS, AND/OR
DISPLACEMENT VALUES BY THE OPTIMIZATION PARAMETERS
1314

IS THE COST
SATISFACTORILY LOW?
1316

NO

YES

FIG. 13

APPLY THE SCALED STRAIN, STRESS,
AND/OR DISPLACEMENT VALUES TO THE SUBSURFACE
EARTH VOLUME FOR THE QUERY OR UPDATED PARAMETER
1318

STRESS DOMAIN
DIAGRAM
1402

NORMAL
FAULT
REGION
1408

WRENCH
FAULT
REGION
1410

REVERSE
FAULT
REGION
1412

180°

135°

STRESS
ORIENTATION
AXIS
1404

90°

45°

0°

0          1          0          1

STRESS RATIO AXIS
1406

FIG.14

40

**FIG.15**

START

PERFORM INVERSION USING DEFINITION OF FAULTS AND OBSERVED DATA TO OBTAIN MULTIPLE SOLUTIONS —— 1500

SELECT COST FUNCTION BASED ON TYPE OF DATA —— 1502

OBTAIN STRESS RATIO VALUE AND ORIENTATION VALUE FROM A SOLUTION —— 1504

ANALYZE, USING SELECTED COST FUNCTION, STRESS RATIO VALUE, AND ORIENTATION VALUE TO OBTAIN RESULT —— 1506

STORE RESULT —— 1508

PERFORM ANOTHER ANALYSIS? —— 1510
YES

NO

GENERATE STRESS DOMAIN DIAGRAM USING RESULTS —— 1512

RECEIVE SELECTION OF POINT ON STRESS DOMAIN DIAGRAM? —— 1514
NO

YES

IDENTIFY SELECTED POINT —— 1516

CALCULATE FRACTURE PREDICTION, PERTURBED STRESS FIELD, AND DISPLACEMENT FIELD FOR SELECTED POINT —— 1518

PRESENT FRACTURE PREDICTION, PERTURBED STRESS FIELD, AND DISPLACEMENT FIELD —— 1520

END

EXAMPLE DISPLAY OF
STRESS DOMAIN DIAGRAM
1600

EXAMPLE STRESS
DOMAIN DIAGRAM
1602

LEGEND 1604

| REGIME | NORMAL |
|--------|--------|
| R | 0.54 |
| $\sigma_H$ | N104° |

CHART IDENTIFYING
SELECTED POINT
1606

FIG.16

EP 2 639 604 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. MAERTEN ; P. G. RESOR ; D. D. POLLARD ; L. MAERTEN.** Inverting for slip on three-dimensional fault surfaces using angular dislocations. *Bulletin of the Seismological Society of America,* 2005, vol. 95, 1654-1665

- **A. L. THOMAS.** Poly3D: a three-dimensional, polygonal element, displacement discontinuity boundary element computer program with applications to fractures, faults, and cavities in the earth's crust. *Master's thesis,* 1995
- **F. MAERTEN ; L. MAERTEN ; M. COOKE.** Solving 3d boundary element problems using constrained iterative approach. *Computational Geosciences,* 2009